# NEUE EUROPÄISCHE PATENTSCHRIFT

(11) **EP 1 131 249 B2**
(45) Veröffentlichungstag und Bekanntmachung des Hinweises auf die Entscheidung über den Einspruch: **03.12.2008**
(45) Hinweis auf die Patenterteilung: 02.06.2004
(21) Anmeldenummer: 99972181.4
(22) Anmeldetag: 05.11.1999
(51) Int. Cl.: B65D 6/18

(54) **BEHÄLTER AUS MEHREREN PLATTEN**
CONTAINER CONSISTING OF A PLURALITY OF PLATES
CONTENEUR CONSTITUE DE PLUSIEURS PLAQUES

(30) Priorität: 18.11.1998 AT 192598
(43) Veröffentlichungstag der Anmeldung: 12.09.2001
(73) Patentinhaber: STECO Logistic GmbH, 4812 Pinsdorf (AT)
(72) Erfinder: ZELKO, Johannes, A-4643 Pettenbach (AT)
(74) Vertreter: Secklehner, Günter
(86) Internationale Anmeldenummer: PCT/AT1999/000267
(87) Internationale Veröffentlichungsnummer: WO 2000/029294

(56) Entgegenhaltungen:
- EP-A- 0 759 400
- EP-A- 0 773 171
- EP-A- 0 785 140
- WO-A-97/41037
- WO-A-98/34838
- WO-A1-97/16353
- WO-A1-97/26190
- WO-A1-97/39954
- DE-A- 19 601 679
- DE-U- 29 710 794
- US-A- 4 751 773
- US-A- 4 960 223
- US-A- 5 722 550

## Beschreibung

Die Erfindung bezieht sich auf einen Behälter, wie dieser im Oberbegriff des Anspruches 1 beschrieben ist.

Ein solcher Behälter, bestehend aus mehreren Platten, wovon mehrere dieser Platten über Gelenksanordnungen verschwenkbar sind, ist aus der EP 0 773 171 A bekannt. Dazu ist ein Schwenkzapfen parallel zu einer Stirnkante einer als Seitenwand ausgebildeten Platte über einen Verbindungssteg distanziert von dieser gehaltert und je in zumindest einer Nut in einer als Boden ausgebildeten Platte gelagert. Es ist dabei an der Nut ein einen der beiden Endbereiche des Schwenkzapfens zumindest teilweise umschließender Halteansatz gebildet, wobei die Nut eine offene Länge aufweist, die zumindest der Länge des Schwenkzapfens entspricht. Die Nut ist durch einen Anschlag begrenzt und ein Abstand zwischen dem Halteansatz und dem Anschlag ist zumindest gleich einer parallel zum Schwenkzapfen verlaufenden Länge des Verbindungssteges, jedoch nicht größer als die Summe aus der Länge des Verbindungssteges und einer Zapfenlänge des über diesen in gleicher Richtung vorragenden Endbereiches des Schwenkzapfens. Die Nuten des Behälterbodens sind dabei an dessen Stirnseiten nach außen hin frei zugänglich und die Montage der Seitenwände erfolgt durch bereichsweise Deformation des Halteansatzes zur Einbringung des Schwenkzapfens von außen in die Nut.

Die WO 98/34838 A zeigt einen Behälter mit einem Behälterboden und mit dem Behälterboden verbundenen Seitenwänden, die mittels Scharnieren im Behälterboden klappbar gelagert sind. Die Scharniere sind dabei in einer aus dem Behälterboden vorragenden Randleiste ausgebildet und derart als verrastbare Steckverbindungen ausgebildet, daß die Seitenwände mit ihren am unteren Seitenwandrand angeordneten Scharnierausbildungen in normaler Stellung auf den Behälterboden in die sich in der Randleiste befindlichen, korrespondierenden Öffnungen einsteckbar und mittels Rastelementen verrastbar sind.

Auch sind derartige Behälter unter anderem aus der WO 94/11259 A, der WO 95/13970 A und der WO 97/41037 A, die auf die Vorgängerfirma der Anmelderin zurückgehen, bekannt. Bei derartigen Behältern, die aus mehreren Platten bestehen, wovon eine den Boden und die anderen die Seitenwände bilden, können die Platten zu Reinigungszwecken bzw. zum Leertransport in eine zueinander parallele Lage verschwenkt werden, sodaß sie in zum Boden paralleler Lage über diesen nach außen vorstehen oder in einer solchen Lage einwärts auf den Boden geklappt sind.

Zum Transport der Güter werden die die Seitenwände bildenden Platten in etwa in eine rechtwinkelig zum Boden verlaufende Lage hochgeschwenkt und untereinander arretiert.

Die Schwenkvorrichtungen zwischen den einzelnen Platten werden durch Schwenkzapfen gebildet, die über Verbindungsstege distanziert von den Stirnkanten der einzelnen Platten gehalten sind und in Nuten der anderen Platte einrasten. Durch eine Relativverschiebung der einzelnen Platten zueinander in Richtung der Längsachse der Schwenkzapfen ist es bei einigen dieser Behälter möglich, die Platten voneinander zu trennen.

Weiters ist auch ein Behälter gemäß der WO 96/11144 A1 und gemäß der DE 42 01 145 A1 bekannt, die in etwa ähnlich wie die zuvor beschriebenen Behälter ausgebildet sind. Bei diesen Behältern ist einerseits vorgesehen, daß gemäß der Ausbildung in der erstgenannten Druckschrift eine der Führungshülsen für den Schwenkzapfen geschlitzt und in radialer Richtung elastisch verformbar ausgebildet ist, um ein Einsetzen und Arretieren der gegenüber der den Boden bildenden Platte verschwenkbare Lage zu gelangen, wogegen bei der weiteren Ausführungsform die Schwenkvorrichtung so ausgestaltet ist, daß die Schwenkzapfen bei aufgerichteten, die Seitenwände bildenden Platten von vertikalen Belastungen, d.h. also senkrecht zu der den Boden bildenden Platte ausgerichteten Belastungen entlastet sind.

Bei all den vorgenannten Behältern konnten diese jedoch nicht alle an sie gestellten Anforderungen hinsichtlich der erforderlichen Festigkeitseigenschaften und der ausreichenden Belastbarkeit der Verriegelungselemente erfüllen.

Der vorliegenden Erfindung liegt daher die Aufgabe zugrunde, einen Behälter-zuschaffen, der höheren Beanspruchungen durch das damit transportierte Gut als auch Beanspruchungen, die von außen auf den Behälter während des Transportes des Gutes eintreten, einen hohen Widerstand entgegensetzen und auch bei übereinandergestapelten Behältern eine ausreichende Tätigkeit zur Aufnahme des Gewichtes des darübergelagerten Behälters aufweist.

Diese Aufgabe der Erfindung wird durch die Merkmale im Kennzeichenteil der Ansprüche 1 bis 4 gelöst.

Vorteilhaft ist bei der in Anspruch 1 angegebenen Lösung, daß durch die Anordnung von Randleisten die Tragfähigkeit der den Boden bildenden Platte entsprechend verstärkt wird und überdies die Gelenkanordnungen über die Oberfläche des Bodens hinaus verlagert werden, sodaß ein Einsetzen und Lösen der die Seitenwände bildenden Platten vom Boden in horizontaler auf den Boden eingeschränkter Lage möglich wird und andererseits im aufgerichteten Zustand die Schwenkzapfen nach außen hin geschützt und abgedeckt angeordnet sein können. Dadurch wird ein besserer Schutz dieser heiklen und sensiblen Schwenkzapfen der Schwenkvorrichtungen, beispielsweise durch Gabelstaplerzinken oder zu eng aneinandergestellte Behälter oder bei Schlägen durch die Bordwand eines Kraftfahrzeuges verringert.

Bei der Ausführungsvariante nach Anspruch 2 wird mit Vorteil erreicht, daß eine Mindestvorspannung der Schwenkzapfen gegenüber den diese aufnehmenden Lagerbereichen in der Nut, also der weiteren Platte erzielt wird, sodaß auch bei Schlagbeanspruchung und Vibrationen eine ausreichende Führung und Halterung des Schwenkzapfens in der Nut erzielt werden kann. Dazu kommt, daß gleichzeitig aber unerwünschte Überbeanspruchungen der Schwenkzapfen, die zu einem Bruch oder Verformung derselben führen könnten, mit Sicherheit ausgeschaltet sind. Dies ermöglicht eine hohe vertikale Belastung auch durch übereinandergestapelte Behälter und eine höhere Haltbarkeit der Schwenkzapfen in den Nuten bei gegen den Innenraum des Behälters von außen her die Seitenwände bildenden Platten einwirkenden Schlägen.

Die weitere Ausführungsvariante nach Anspruch 3 ermöglicht in überraschend vorteilhafter Weise ein in der Aufstellrichtung erfolgendes Zusammenschnappen und Einrasten der gegeneinander verstellbaren Platten, wobei durch die Anordnung dieser Verbindungsaufnahmen mit elastisch verformbaren Rückhalteelementen eine Führung und Abstützung in unterschiedlichen Raumrichtungen erreicht wird, die ein Ausbeulen der im Eckbereich miteinander verbundenen Platten in vorteilhafter Weise entgegenwirkt.

Die weitere für sich eigenständige Lösung nach Anspruch 4 ermöglicht eine Verzahnung der aneinanderstoßenden, aufgerichteten Platten in einer sich etwa senkrecht zu der den Boden bildenden Platte befindlichen Platten in unterschiedlichen Raumrichtungen, sodaß auch bei hohen vertikalen oder horizontalen Belastungen ein Ausweichen der aneinanderstoßenden Platten in verschiedenen Raumrichtungen verhindert wird und damit auch bei extremer Belastung durch das aufzunehmende Gut oder durch von außen einwirkende Kräfte von Beförderungsmitteln oder dgl. keine Schäden am Behälter entstehen.

Weitere vorteilhafte Ausbildungen sind in den Ansprüchen 5 bis 68 gekennzeichnet, wobei die dabei erzielbaren Vorteile der detaillierten Beschreibung zu entnehmen.

Die Erfindung wird im nachfolgenden anhand der in den Zeichnungen dargestellten Ausführungsbeispiele näher erläutert.

Es zeigen:
- Fig. 1: einen erfindungsgemäßen Behälter in Schrägansicht mit in paralleler Lage zueinander angeordneten, den Boden und Seitenwände bildenden Platten in vereinfachter und schematischer Darstellung;
- Fig. 2: den Behälter nach Fig. 1 in schaubildlicher Darstellung mit in Gebrauchsstellung hochgeklappten Seitenwände bildenden Platten;
- Fig. 3: einen erfindungsgemäßen Behälter in einer anderen Transportstellung mit einwärts auf die den Boden bildende Platte abgeklappten, die Seitenwände bildenden Platten;
- Fig. 4: eine Seitenwand bildende Platte des erfindungsgemäßen Behälters in Seitenansicht;
- Fig. 5: einen stirnseitigen Endteil der Platte in Stirnansicht geschnitten gemäß den Linien V - V in Fig. 4;
- Fig. 6: die die Seitenwand bildende Platte in Seitenansicht in ihrer zu der den Boden bildenden Platte unter 90° hochgeschwenkter Gebrauchsstellung;
- Fig. 7: einen Teil der die Seitenwand bildenden Platte in einem Stirnendbereich derselben in vergrößertem Maßstab in Seitenansicht;
- Fig. 8: eine eine Stirnwand des Behälters bildende Platte in Seitenansicht;
- Fig. 9: die die Stirnwand bildende Platte in Stirnansicht geschnitten gemäß den Linien IX - IX in Fig. 8;
- Fig. 10: die die Stirnwand bildende Platte in gegenüber ihrer der den Boden bildenden Platte um 90° hochgeschwenkter Stellung in Seitenansicht bei entfernten die Längsseitenwände bildenden Platten;
- Fig. 11: einen Endbereich der eine Stirnwand des Behälters bildenden Platte in vergrößertem Maßstab;
- Fig. 12: die den Boden bildende Platte in Stirnansicht bei entfernten die Seitenwänden bildenden Platten, gemäß Pfeil XII in Fig. 2;
- Fig. 13: die den Boden bildende Platte ein Seitenansicht gemäß Pfeil XIII in Fig. 2;
- Fig. 14: ein Schwenklager eines erfindungsgemäßen Behälters zwischen einer einen Boden und einer eine Seitenwand bildende Platte in Seitenansicht mit eingesetztem Schwenkzapfen geschnitten gemäß den Linien XIV - XIV in Fig. 3;
- Fig. 15: das Schwenklager in Stirnansicht geschnitten gemäß den Pfeilen XV - XV in Fig. 14;
- Fig. 16: das Schwenklager zwischen zwei Platten in Stirnansicht geschnitten gemäß den Linien XVI - XVI in Fig. 14;
- Fig. 17: eine Ausführungsvariante der Ausbildung des Schwenklagers in Stirnansicht geschnitten nach Fig. 16;
- Fig. 18: eine Seitenansicht auf ein Schwenklager eines erfindungsgemäßen Behälters zwischen einer einen Boden und einer eine Seitenwand bildende Platte in Seitenansicht geschnitten nach Fig. 14, bei in den Halteeinsatz eingeschobenen Endbereich des Schwenkzapfens;
- Fig. 19: einen stirnseitigen Endteil einer Platte in Stirnansicht geschnitten;
- Fig. 20: einen Teilbereich einer weiteren Platte in der Seitenansicht;
- Fig. 21: den Eckbereich zwischen zwei vertikal zu einer einen Boden bildenden Platte aufgerichteten Platten, in Gebrauchsstellung;
- Fig. 22: den Eckbereich nach Fig. 21 geschnitten gemäß den Linien XXII - XXII in Fig. 21;
- Fig. 23: einen Teilbereich des Eckbereiches nach Fig. 21, geschnitten gemäß den Linien XXIII - XXIII in Fig. 21;
- Fig. 24: eine weitere Ausführungsform des Teilbereiches nach Fig. 23;
- Fig. 25: ein Überlappungsbereich einer Platte in Stirnansicht geschnitten;
- Fig. 26: den Überlappungsbereich mit ineinandergeklappten Platten in Stirnansicht geschnitten.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

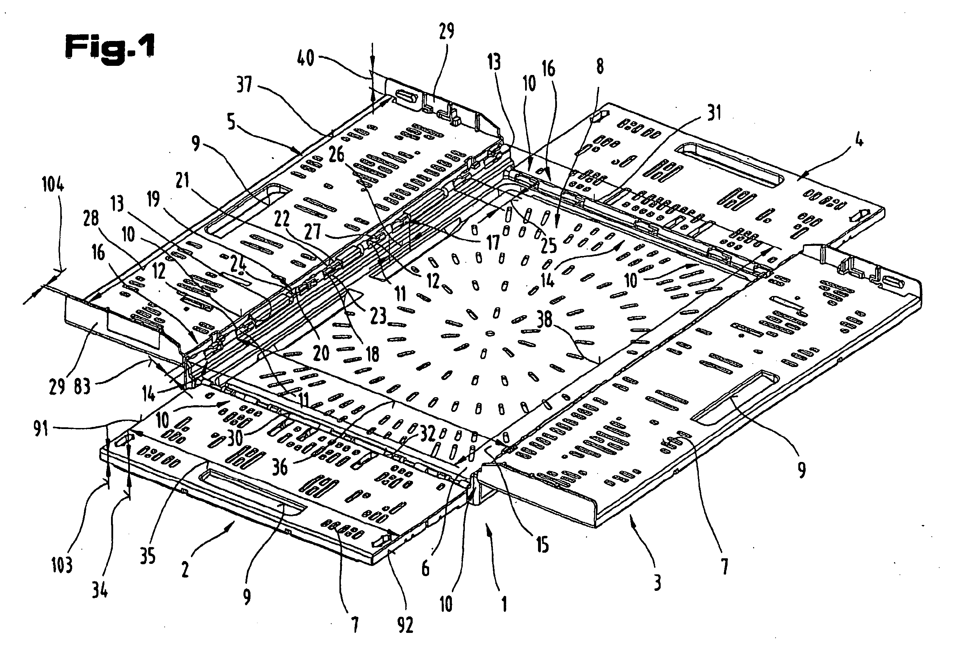

In den Fig. 1 bis 3 ist ein Behälter 1, zum Teil auch als Steige bezeichnet, gezeigt, der zum Transport von Nahrungsmitteln, insbesondere Frischwaren wie Obst, Gemüse, aber auch für abgepackte Nahrungsmittel wie Milchflaschen, Milchpakete oder ähnlichem geeignet ist.

Der Behälter 1 besteht aus mehreren, insbesondere vier oder mehr Platten 2 bis 6, wobei bei dem abgebildeten Behälter mit einer rechteckigen Grundfläche im Gegensatz zu einem solchem mit einer dreieckigen Grundfläche fünf Platten 2 bis 6 angeordnet sind.

Die Platte 6 bildet hierbei einen Boden und die Platten 2 und 4 bilden Stirnseitenwände und die Platten 3 und 5 Längsseitenwände. Diese Bezeichnung wurde nur deshalb gewählt, da der Boden, nämlich die Platte 6, eine Rechteckfläche bildet. Ist der Boden quadratisch, weisen selbstverständlich alle vier die Seitenwände bildenden Platten 2 bis 5 annähernd die gleiche Länge auf.

Die einzelnen Platten 2 bis 6 können beliebig ausgestaltet sein und beispielsweise durch eine Fachwerkkonstruktion, eine Holmkonstruktion oder eine Platte mit einoder beidseitig vorspringenden Verstärkungsrippen gebildet sein.

Im vorliegenden Ausführungsbeispiel ist lediglich beispielhaft aufgezeigt, daß jede der Platten 2 bis 6 auf denen einander zugewandten Oberflächen ebenflächig mit einer geringen Anzahl von Durchbrüchen 7, z.B. zur Belüftung eines Innenraums 8, versehen ist. Unter anderem können aber auch Ausschnitte 9, die als Handgriffe ausgebildet und verwendbar sind, in den Platten 2 bis 5 angeordnet sein.

Die Ausführung, bei der die einander zugewendeten Oberflächen der Platten 2 bis 6 glatt und ohne Verrippung ausgebildet sind, hat den Vorteil, daß Beschädigungen der zu transportierenden Nahrungsmittel durch vorspringende Teile verhindert werden kann und andererseits eine gute Reinigung nach dem Gebrauch möglich ist.

Um ein möglichst günstiges Verhältnis zwischen dem Volumen im Transportzustand, in dem der Behälter 1 leer ist, und dem Gebrauchszustand, in dem der Behälter 1 mit Waren oder Gegenständen bzw. Lebensmitteln befüllt ist, zu erreichen, sind die Platten 2 bis 5 an mit der den Boden bildenden Platte 6 über Schwenkvorrichtungen 10 verbunden.

Diese Schwenkvorrichtungen 10 bestehen aus einem Schwenkzapfen 11, der über einen Verbindungssteg 12 distanziert von einer diesem zugewandten Stirnkante 13 der Platten 2 bis 5 feststehend angeordnet ist. Dieser Schwenkzapfen 12 ist in einem Lagergehäuse 14 bedarfsweise herausnehmbar schwenkbar gelagert.

Dieses Lagergehäuse 14 wird durch über eine innere Oberfläche 15 im umlaufenden Randbereich vorspringende Randleisten 16 gebildet, in der zur Aufnahme der Schwenkzapfen 11 über eine Teillänge der jeweiligen Platte im Abstand voneinander angeordnet, Nuten 17 vorgesehen sind.

Die Nuten 17 sind in Richtung der gegenüberliegenden Seitenwand bzw. Stirnseitenwand geöffnet, sodaß die Schwenkzapfen 11 bei in etwa parallel zum Boden verstellter Lage der die Seitenwände bildenden Platten 2 bis 5 diese in die vertieften Nuten 17 eingesetzt bzw. aus diesen entfernt werden können. Dieses Einsetzen und Entfernen kann durch elastisches Verformen von Arretierzapfen oder Arretierflächen erfolgen, ist dies aber nicht zwingend erforderlich.

Durch eine Relativverschiebung jeder einzelnen Platte 2 bis 5 zu der den Boden bildenden Platte 6 jeweils in Längsrichtung der zugeordneten Stirnkante 13 der Platte 6 wird einer von zwei über den Verbindungssteg 12 vorragenden Endbereiche 18 des Schwenkzapfens 11 in einen einen Halteansatz 19 bildenden Teil der Nut 17 eingeschoben.

Dieser Halteansatz 19 wird dadurch gebildet, daß ein Teil der Nut 17 durch ein Verkleidungselement 20 abgedeckt ist.

Bei in den Halteansatz 19 eingeschobenem Endbereich 18 des Schwenkzapfens 11 kommt der Verbindungssteg 12 in eine durch eine Ausnehmung 21 in einer die Nut 17 bildenden Seitenwange 22 und gegebenenfalls zumindest einen Teil einer Basisplatte 23 angeordneten Ausnehmung 21, die eine parallel zur Längsrichtung der Schwenkzapfen 11 verlaufende Länge aufweist, die zumindest einer in der gleichen Richtung gemessenen Breite des Verbindungssteges 12 entspricht. Diese Ausnehmung 21 erstreckt sich über einen Schwenkbereich von zumindest 90°, bezogen auf die Längsmittelachse 24 der Schwenkzapfen 11.

Eine zum Mittelbereich der den Boden bildenden Platte 6 hingewandte offene Länge 25 der Nut 17 ist gleich oder geringfügig größer als eine Länge 26 des Schwenkzapfens 11.

Durch die Gestaltung der Ausnehmungen 21 in Verbindung mit dem Schwenkzapfen 11 und den Verbindungsstegen 12 ist es nunmehr möglich, die Platten 2 bis 5, also die die Stirnseiten bildenden Platten 2 und 4 und jene die Längsseiten bildenden Platten 3 und 5 aus einer flach am Boden aufliegenden - nach innen geklappten Transportstellung - in eine um 180° nach außen, die den Boden bildende Platte 6 überragende, in etwa parallel zu dieser - Transport- oder Reinigungsstellung - nach auswärts zu verschwenken, sodaß sie außerhalb der umlaufenden Stirnseitenkante der den Boden bildenden Platte 6 zum liegen kommen.

Die Gebrauchsstellung der einzelnen Platten 2 bis 5 relativ zu der den Boden bildenden Platte 6 befindet sich zwischen der parallel zur Platte 6 verlaufenden nach außen bzw. nach innen verschwenkten Lage, in welcher sie senkrecht zur Platte 6 ausgerichtet sind und mit dieser einen Winkel von 90° zwischen sich und der Platte 6 einschließen.

Zur Führung der Platten 2 bis 5 in ihrer Relativlage zur Platte 6 in parallel zueinander verlaufenden Stirnlängsseitenkanten der Platten 2 bis 5 verlaufender Richtung ist über einen Großteil der Schwenkbewegung der Verbindungssteg 12 in der Ausnehmung 21 zwischen dem Halteansatz 19 und einem gegenüberliegenden Anschlag 27 geführt.

Die Nut 17 weist einen in etwa U- bzw. C-förmigen Querschnitt auf, wobei eine symmetrisch zwischen den Schenkeln verlaufende Hochachse unter einem Winkel von 5° bis 25°, bevorzugt 8° bis 20°, zur Oberfläche des Bodens derart geneigt verläuft, daß sie zum Mittelbereich der den Boden bildenden Platte 6 ansteigt. Über diesen Winkelbereich ist eine Relativverschiebung zwischen der Platte 6 und den Platten 2 bis 5 sowie den Platten 3 und 5 möglich, sodaß diese über senkrecht zu ihrer Innenfläche 28 vorragende Anschlagleisten 29 geführt sind, in deren Schwenkbereich die den die Stirnseitenwände bildenden Platten 2, 4 zugewandten Stirnkanten 30, 31 übergreifen und daher eine Relativverschiebung zwischen den Platten 3, 5 und 6 verhindern.

Selbstverständlich ist es hierbei auch möglich, daß diese Anschlagleisten 29 in ihrer auf die Platte 6 eingeklappten Lage, die parallel zu den Stirnkanten 30 verlaufenden Stirnkanten 32, 33 der die Querseitenwände bildenden Platten 2, 4 übergreifen.

Selbstverständlich ist es auch möglich, die Anschlagleisten 29 anstelle der Anordnung auf den die Längsseitenwände bildenden Platten 3, 5 auf den die Querseitenwände bildenden Platten 2, 4 anzuordnen, sodaß diese gegengleich diese die Längsseitenwände 3, 5 bzw. die parallel zu diesen verlaufenden Stirnseitenkanten der den Boden bildenden Platte 6 übergreifen.

Sind dagegen, wie beim vorliegend gezeigten Ausführungsbeispiel, die Anschlagleisten 29 auf den die Längsseitenwände bildenden Platten 3, 5 angeordnet, so sind die Längsmittelachsen 24 der Nuten 17 bzw. der Schwenkzapfen 11 in einem eine Dicke 34 dem der Platten 2, 4 entsprechenden in Fig. 1 gezeigten Ausmaß oberhalb der Oberfläche 15 der Platte 6 angeordnet. Durch die dadurch erhöhten Randleisten 16, die die Lagergehäuse 14 für die Schwenkzapfen 11 bilden, wird ein etwa U-förmiger Aufnahmekanal gemeinsam mit der den Boden bildenden Platte 6 gebildet und werden durch diese Randleisten 16 die die Querseitenwände bildenden Platten 2, 4 in dem Winkelbereich, in welchem die Nuten 17 zur Mitte der den Boden bildenden Platte 6 geöffnet sind, seitlich geführt, sodaß die Endbereiche 18 der Schwenkzapfen 11, die in den Halteansätzen 19 geführt sind, in diesem Bereich der Schwenkbewegung nicht aus den Halteansätzen 19 herausgeschoben werden können.

Dementsprechend ist eine Länge 35 gleich oder geringfügig kleiner als eine Innenweite 36 zwischen den einander zugewandten Seitenflächen der Lagergehäuse 14 zur Aufnahme der Schwenkzapfen 11 der die Längsseitenwände bildenden Platten 3 und 5. Des weiteren ist auch eine Innenweite 37 zwischen den Anschlagleisten 29 jeder der die Längsseitenwände bildenden Platten 3 und 5 gleich oder geringfügig größer als eine maximale Distanz 38 zwischen voneinander abgewendeten Stirnkanten 39 der Lagergehäuse 14 zur Aufnahme der Schwenkzapfen 11 der Querseitenwände bildenden Platten 2 und 4.

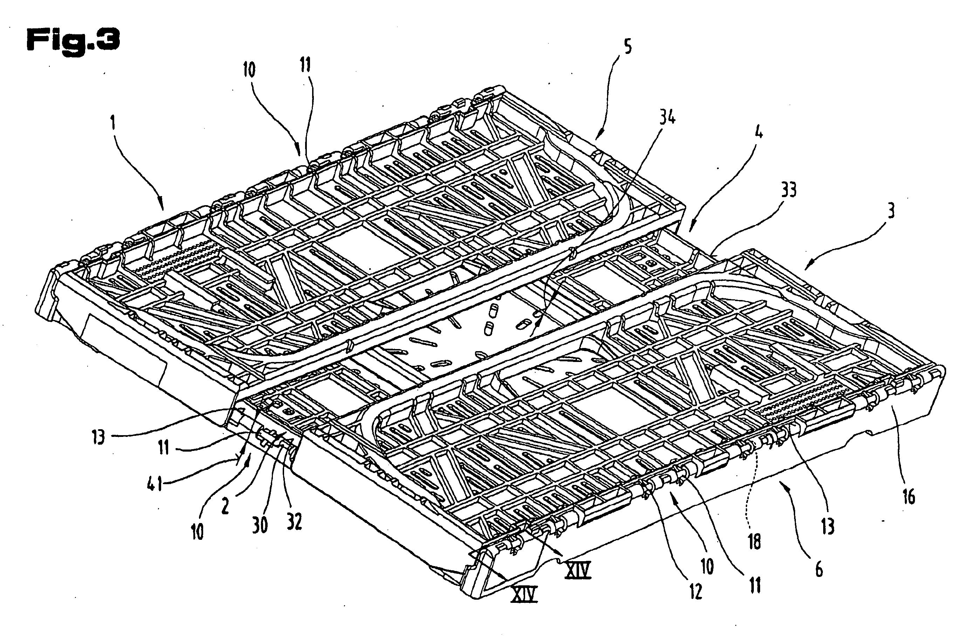

Gleichermaßen ist auch eine Höhe 40, über die die Anschlagleisten 29 senkrecht über die Innenfläche 28 der die Längsseitenwände bildenden Platten 3, 5 nach oben vorragen, gleich oder kleiner als eine Dicke 34 der die Querseitenwand bildenden Platte 2, 4 zuzüglich einer in Fig. 3 gezeigten Dicke 41 der den Boden bildenden Platte 6.

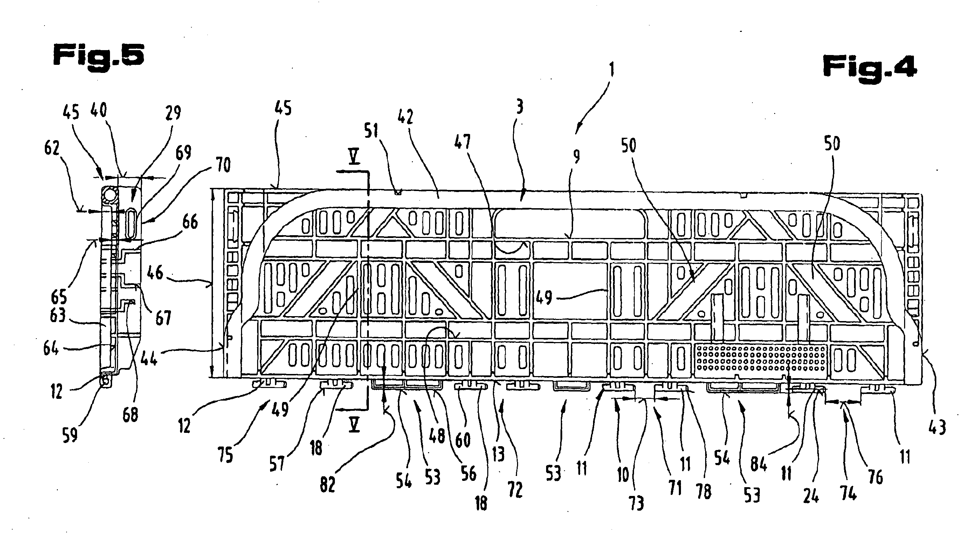

Während nun anhand der Fig. 1 bis 3 der prinzipielle Aufbau des Behälters 1 und dessen grobe Funktionsweise beschrieben wird, wird nun anhand der Detaildarstellungen dieses Behälters 1 in den Fig. 4 bis 13 und 14 bis 18 die Detailauslegung und die Ausbildung der einzelnen Platten 2 bis 6 detailliert beschrieben.

In den Fig. 4 bis 6 ist eine der beiden die Längsseitenwände des Behälters 1 bildenden Platten 3, 5 und zwar die Platte 3 im Detail dargestellt. Aus der Darstellung in Fig. 4 und 5 ist der Aufbau der Platte 3 bzw. 5 im Detail ersichtlich.

So weist diese Platte 3 einen Verstärkungsbügel 42 auf, der durch einen Hohlkörper gebildet ist. Dieser Verstärkungsbügel 42 verläuft annähernd entlang von Schmalstirnseiten 43, 44 von der Stirnkante 13 in Richtung einer Längsstirnseitenkante 45.

Zur verbesserten Krafteinleitung bei übereinandergestapelten Behältern 1 ist es zweckmäßig, wenn die vertikal verlaufenden Teilbereiche des Verstärkungsbügels 42 über Bogenelemente mit den horizontalen Teilbereichen des Verstärkungsbügels 42 verbunden sind. Gleichermaßen ist es vorteilhaft, wenn zur Verstärkung der benachbarten Teilbereiche der Seitenwände der Verstärkungsbügel 42 nur über einen Teilbereich einer Höhe 46 der Platte 3 zumindest um die Stärke des Eckstehers in Richtung des Mittellängsbereiches versetzt bzw. zurückspringend angeordnet ist.

Der Verstärkungsbügel 42 besteht aus einem Kunststoffhohlprofil. Dieses Kunststoffhohlprofil kann bevorzugt durch einen Spritzvorgang und nachträgliches Ausblasen der Seele des Spritzgußteils, solange sich das Kunststoffmaterial in dem Zentralbereich noch im flüssigen bzw. plastischen Zustand befindet, in einem Arbeitsgang mit den übrigen Teilen der Platte 3 bzw. 5 hergestellt werden. Durch die Anlenkung von weiteren stabförmigen Längsträgern 47, 48 und Vertikalträgern 49 sowie Diagonalstützelemente 50 kann eine sehr gute räumliche Aussteifung, aber vor allem eine sehr hohe Vertikallast durch diese Platten 3, 5 aufgenommen werden.

Interessant ist hierbei, daß im Bereich der Längsseitenkante 45 Zentrierausnehmungen 51 angeordnet sind, die mit entsprechenden Zentriervorsprüngen 52 in der den Boden bildenden Platte 6 des darüberliegenden Behälters 1 zusammenwirken können. Da in diesem Bereich dann auch eine relativ hohe Krafteinleitung einsetzt, enden die beiden aufeinander zugerichteten Diagonalstützen 50 etwa in diesem Bereich, um die dort massiv auftretenden Kräfte gleichmäßig über die Längsseitenwand 3, 5 bzw. die einzelnen Längsträger 47, 48 und Vertikalstützen 49 zwischen dem Verstärkungsbügel 42 und den Schwenkvorrichtungen 10, insbesondere auch gegen Ausbeulung, zu versteifen.

Um eine hohe Festigkeit und Widerstandfähigkeit der Schwenkvorrichtungen 10 zu erreichen, ist es auch vorteilhaft, wenn eine höhere Anzahl von Schwenkzapfen 11 über die Länge der Stirnkante 13 der Platte 3, 5 verteilt angeordnet sind.

So hat es sich als vorteilhaft erwiesen, die Schwenkvorrichtungen 10 jeweils paarweise nebeneinander anzuordnen und zwischen jeweils einem Paar der Schwenkvorrichtungen 10 befindet sich dann ein Schwenkbegrenzer 53.

Die Aufgabe dieses Schwenkbegrenzers 53 liegt darin, beim Aufstellen der die Längsseitenwände bildenden Platten 3, 5, aber eventuell auch der Platten 2, 4, ein Verbleiben der Platten 2 bis 5 in ihrer aufgerichteten Stellung zu erzielen. Eine Aufstandsfläche 54 dieser Schwenkbegrenzer 53 dient auch als Überlastsicherung für die Schwenkvorrichtungen 10. Werden nämlich die Schwenkvorrichtungen 10 mit einer nicht vorgeplanten höheren Belastung beaufschlagt, so können sich die Aufstandsflächen 54 auf den diesen zugeordneten gegenüberliegenden Stützflächen 55 auf der einen Boden bildenden Platte 6 abstützen und damit die maximale auf die Schwenkvorrichtung 10 bzw. deren Schwenkzapfen 11 einwirkende Belastung verringern.

Durch diese über die Schwenkvorrichtungen 10 übertragene Grundbelastung der auf die Platten 2 bis 5 einwirkenden Vertikallasten wird andererseits eine hohe Flächenpressung zumindest zwischen den Endbereichen 18 des Schwenkzapfens 11 und dem Lagergehäuse 14 bzw. der Nut 17 erzielt, die auch bei starken gegen die die Seitenwände bildenden Platten 3 bzw. 5 gerichteten Schlägen ein Austreten der freiliegenden Endbereiche 18 des Schwenkzapfens 11 aus den diesen zugeordneten Nuten 17 verhindert.

Dadurch, daß eine Seitenkante 56 der in etwa rechteckförmigen Aufstandsfläche 54 über den diese tangierenden Hüllkreis mit einem durch die Längsmittelachse 24 der Schwenkzapfen 11 gebildeten Hüllfläche 57 vorragt, bedarf es zur Überwindung dieser mechanischen Sperre eines zusätzlichen Kraftaufwandes. Andererseits verhindert diese Sperre aber auch dann, wenn die Platten 3, 5, zweckmäßigerweise natürlich auch die Platten 2, 4 in einer etwa vertikalen Lage zu der den Boden bildenden Platte 6 angeordnet sind, daß ein Zurückklappen der Seitenwände von sich aus in eine nach innen bzw. nach außen geklappte Transportlage erschwert wird und somit beim Aufstellen der Platten 2 bis 5, insbesondere 3 und 5, diese in eine in etwa zu deren Boden bildenden Platte 6 vertikalen Lage fixiert sind, sodaß danach die Querseitenwände, die durch die Platten 2 und 4 gebildet sind, in einem Arbeitsgang aufgerichtet werden können.

Dadurch, daß die Aufstandsflächen 54 der Schwenkbegrenzer 53 in einem geringfügigen Abstand 58 oberhalb der diesen zugeordneten Stützflächen 55 der den Boden bildenden Platte 6 angeordnet sind, behindern diese beim Aufstellen der Platten 2 bis 5 des noch nicht befüllten Behälters 1 die Aufschwenkbewegung nur geringfügig. Beim Aufstellen bzw. Aufschwenken der Platten 2 bis 5 laufen die Seitenkanten 56 auf der Aufstandsfläche 54 auf, und werden nun aufgrund der vorspringenden Seitenkanten 56 die Platten 2 bis 5 unter elastischer Verformung quer zu einer Achse 59 der Endbereiche 18, 60 um jenes Ausmaß 61 und das der Seitenkante 56 über welches die Hüllfläche 57 vorragt angehoben, sodaß die Platten 2 bis 5 in eine zur Platte 6 etwa rechtwinkelige Stellung hochgeschwenkt werden können, in der sich die Aufstandsfläche 54 in einer zur Stützfläche 55 parallel, und von dieser geringfügig der Höhe nach distanzierten Lage befindet. Dadurch können die Platten 2 bis 5 um einen geringfügigen Winkelbereich um die Längsachse 24 der Schwenkzapfen 11 verschwenkt werden, können jedoch nicht in ihre zur Platte 6 parallelen, flachen Lage auf der Platte 6 oder seitlich der Platte 6 zurückfallen. Dies erleichtert das Aufrichten der, die Querseitenwände bildende Platten 2, 4 und deren Verriegelung mit den Platten 3,5. Gleichzeitig wird durch diese Auslegung eine Überbeanspruchung der elastisch verformbaren Endbereiche 18 der Schwenkzapfen 11 verhindert.

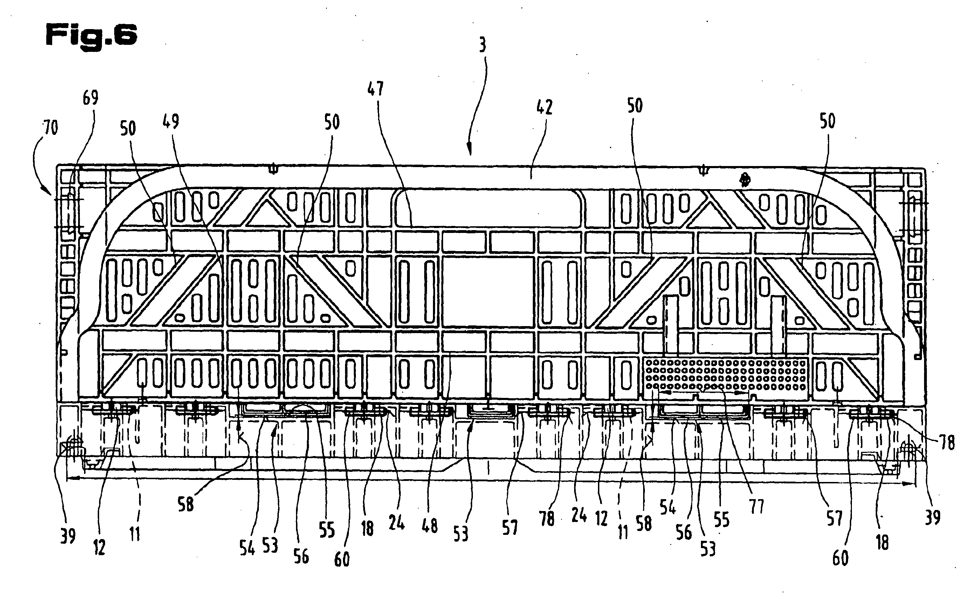

Jede der Platten 2 bis 5 weist eine in etwa gleiche Dicke 34 auf. Bevorzugt ist dabei eine, in der Ebene der Innenfläche 28 verlaufende, Achse 59 des Schwenkzapfens 11, in einem größeren Abstand von der Innenfläche 28 angeordnet als die Hälfte der Dicke 34 der einzelnen Platten 2 bis 5. Die Dicke 34 der einzelnen Platten 2 bis 5 ergibt sich aus einer Höhe 62, um die eine außen umlaufende, die Platten 2 bis 5 begrenzende, Randleiste 63 über eine der Innenfläche 28 gegenüberliegende Außenfläche 64 der Platten 2 bis 5 vorragt, sowie einer Dicke 65 der jeweiligen Platte 2 bis 5. Zur Versteifung der Platten 2 bis 6 sind innerhalb der, die Platten umgrenzenden, Randleisten 63 die bereits einleitend genannten Längsträger 47, 48, Vertikalträger 49 und Diagonalstützen 50, wie am besten aus den Ansichten der Fig. 4 und 6 ersichtlich, angeordnet.

Während nun die Randleisten 63 über die Außenfläche 64 der Platten 2 bis 6 vorragen, ragen bei den Platten 3 und 5, die die Längsseitenwände bilden, im Bereich der Schmalstirnseiten 43, 44 Anschlagleisten 29 um die Höhe 40 vor, wie dies bereits anhand der Fig. 1 beschrieben worden ist. Auf diesen Randleisten 29 sind auf einer dem Mittelbereich der Platte 3, 5 zugewandten Seite Stütz- bzw. Zentrierelemente 66, 67, 68 angeordnet, die später noch anhand der die Querseitenwände bildenden Platten 2 und 4 beschrieben werden, die mit entsprechend gegengleichen Stütz- bzw. Zentrierelementen in den Randbereichen der Schmalstirnseiten der Platten 2 bis 4 zusammenwirken.

Des weiteren ist ein Verbindungselement 69 einer Verbindungsvorrichtung 70 zum lösbaren Verbinden der Platten 2, 4 mit den Platten 3, 5 in ihrer aufgerichteten, etwa senkrecht zur Platte 6 verlaufenden Lage angeordnet.

Die Detailausführung dieser Verbindungsvorrichtung 70 wird anhand von Detaildarstellungen in der Folge noch näher erläutert.

Wie weiters aus der Schnittdarstellung in Fig. 5 noch zu ersehen ist, ist die Randleiste 63 im Bereich der den Schwenkzapfen 11 gegenüberliegenden Längsstirnseitenkante 45 als Hohlprofil ausgebildet. Der Hohlraum in diesem Bereich der Randleiste 63 kann dabei im Zuge des Herstellungsvorganges durch Ausblasen von, während des Abkühlungsvorganges noch plastfizierten bzw. flüssigen, Kunststoff aus der bereits in Erstarrung befindlichen Hülle erfolgen, wie dies an sich aus dem Stand der Technik bereits in verschiedensten Ausführungsformen bekannt ist. Zum Nachweis des Bekanntseins dieser Technologie, insbesondere des Aufbaus dieses Hohlraums und der Verfahrensparameter für das auch als "Air-mold" bezeichnete Verfahren, wird die Beschreibung der DE 39 40 186 A1 zum Inhalt dieser Anmeldung gemacht.

Weiters ist aus den Darstellungen in den Fig. 4 und 6 zu ersehen, daß über die Länge der Stirnkante 13 der Platten 3 und 5 mehrere Schwenkzapfen 11 angeordnet sind, die jeweils über eigene Verbindungsstege 12 im Abstand von der Stirnkante 13 vorgesehen sind. Zweckmäßigerweise sind die, über die Verbindungsstege 12 im Abstand von der Stirnkante 13 gehalterten Schwenkzapfen 11 paarweise angeordnet, wobei die einer Längsmitte der Platten 3 und 5 nächstliegenden Schwenkzapfenpaare 71 und 72 eine geringere Distanz 73 zwischen den einzelnen Schwenkzapfen 11 aufweisen, als die im Bereich der Schmalstirnseiten 43, 44 angeordneten Schwenkzapfenpaare 74, 75 bei welchen die Schwenkzapfen 11 in einer Distanz 76 voneinander angeordnet sind. Zwischen diesen Schwenkzapfenpaaren 71, 72, und 74, 75 sind jeweils Schwenkbegrenzer 53 angeordnet. Auch hier ist wiederum eine Länge 77 der Schwenkbegrenzer 53 in Richtung der Schmalstirnseiten 43, 44 zwischen den Schwenkzapfenpaaren 71, 72 geringer als zwischen den Schwenkzapfenpaaren 71 und 74 bzw. 72 und 75. Durch diese auf engsten Raum angeordneten Schwenkzapfen 11, wird eine intensive und hoch belastbare Verbindung im Bereich der als Handgriffe herangezogenen Ausschnitte 9 der Platten 3 und 5 erreicht. Trotzdem wird über die Länge eine etwa gleiche Aufteilung der Vertikallasten beim Aufheben der Behälter 1 erzielt, da im Bereich der Schmalstirnseiten 43, 44, wie bereits zuvor erläutert, eine zusätzliche Abstützung in vertikaler Richtung über die Stütz- bzw. Zentrierelemente 66, 67, 68 erfolgt.

Dazu kommt, daß die größere Länge der Schwenkbegrenzer 53 im Bereich der Schmalstirnseiten 43, 44 ein Zurückfallen der Platten 2 bis 5 besser verhindert, da die Platten in den Eckbereichen, aufgrund eventuell exzentrisch vorragender Gewichtsteile, eher die Neigung haben nach innen zu klappen, nicht zuletzt durch die Anordnung der vorragenden Anschlagleisten 29 mit den Stütz- bzw. Zentrierelementen 66 bis 68.

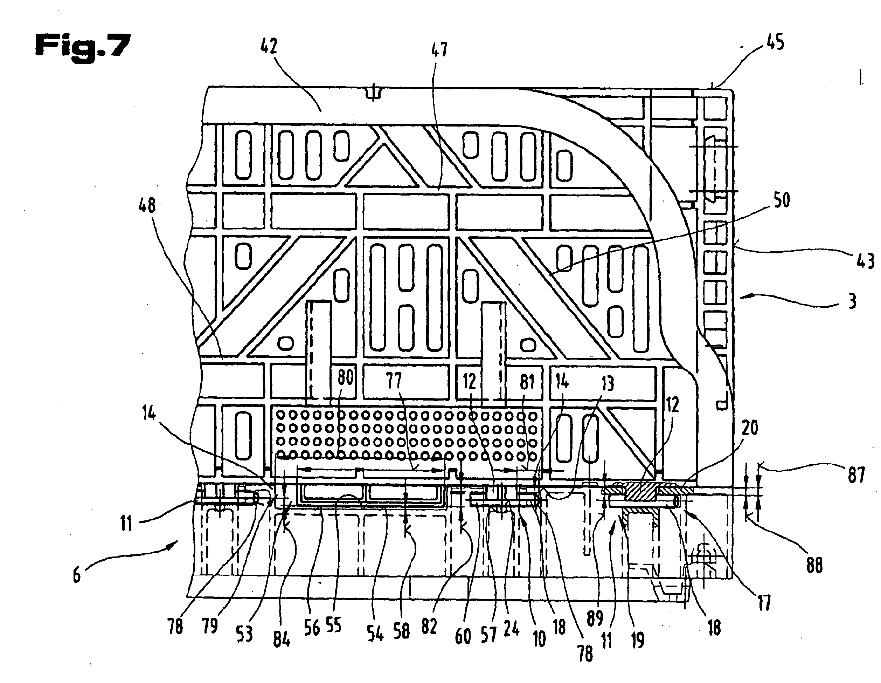

Wie insbesondere der vergrößerten Darstellung in Fig. 7 deutlich zu entnehmen ist, aber auch der Darstellung in Fig. 6, sind die Endbereiche 18, 60 an ihrem, vom Verbindungssteg 12 abgewendeten Ende mit einer konischen Führungsfläche 78 versehen. Diese dient, wie anhand der nachfolgenden Darstellungen noch beschrieben werden wird, zum leichteren Einsetzen der Schwenkzapfen 11, der einzelnen Platten 2 bis 5, in die Nut 17 bzw. den Halteansatz 19. Dementsprechend ist, wie nun besser aus Fig. 7 ersichtlich ist, die Länge 77 der Schwenkbegrenzer 53 geringer als eine Ausnehmung 79 im Lagergehäuse 14, die eine Länge 80 aufweist. Die Differenz zwischen der Länge 77 und der Länge 80 entspricht üblicherweise einer, über den Verbindungssteg 12 vorragenden, Zapfenlänge 81 des Endbereiches 18, sodaß nach Einsetzen des Schwenkzapfens 18 in die Nut 17 die gesamte Zapfenlänge 81 durch Relativverschiebung der Platten 2 bis 5 gegenüber der Platte 6 in den Halteansatz 19 im Lagergehäuse 14 eingeführt, und damit eine entsprechend große Führungs- und Stützfläche erzielt werden kann. Selbstverständlich ist es aber auch möglich, daß die Länge 80 um ein größeres Ausmaß als die Zapfenlänge 81 länger sein kann als die Länge 77 der Schwenkbegrenzer 53.

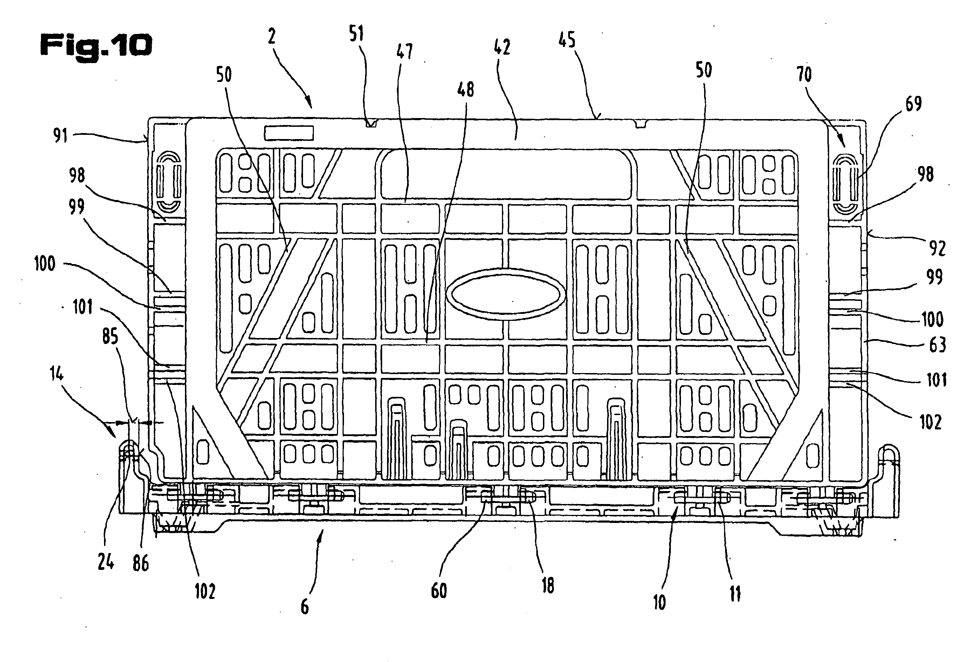

Eine Höhe 82 der Schwenkbegrenzer 53 ist dabei zweckmäßig gleich groß wie eine Breite 83 - wie in der Fig. 1 ersichtlich - des Lagergehäuses 14. In jedem Fall ist darauf zu achten, daß eine Distanz 84 zwischen der Längsmittelachse 24 der Schwenkzapfen 11 und der Aufstandsfläche 54 des Schwenkbegrenzers 53 nicht größer ist als, wie beispielsweise aus Fig. 10 ersichtlich, eine Distanz 85 zwischen der Längsmittelachse 24 der Nut 17 zur Aufnahme des Schwenkzapfens 11 im Lagergehäuse 14 und einer Innenseitenwand 86 des Lagergehäuses 14, die der Platte 6 bzw. dem Mittelbereich der Platte 6 zugewandt ist.

Dadurch wird erreicht, daß bei nach außen geklappten Platten 2 bis 5 durch die vollflächig aufliegenden Schwenkbegrenzer 53 auf den Stützflächen 55 des Lagergehäuses 14 die Schwenkzapfen 11 entlastet werden, und andererseits auch in dieser Stellung die die Stirnseitenwände bildenden Platten 2 und 4 in ihre auf der Platte 6 aufliegende Transportstellung eingeschränkt bzw. fixiert werden können.

Sollte eine solche Stellung bewußt verhindert werden, ist es selbstverständlich auch möglich, die Distanz 84 größer auszubilden als die Distanz 85, um zu verhindern, daß die die Stirnseitenwände bildenden Platten 2 und 4 bei nach außen geklappten Längsseitenwänden nach innen auf die den Boden bildende Platte 6 eingeschränkt und abgelegt werden können.

Gleichermaßen ist der Verbindungssteg 12 derart bemessen, daß ein Maß 87 zwischen der Stirnkante 13 und einem diesen zugewandten nächstliegenden Oberflächenteil des Endbereiches 18 des Schwenkzapfens 11 geringfügig größer ist als eine Distanz 88 zwischen dem Endbereich 18 und der der Stirnkante 13 zugewandten Oberfläche des Verkleidungselementes 20, wobei dieses Maß 87 an einem an dem Verkleidungselement 20 anliegenden Endbereich 18 einer Dicke 89 des Verkleidungselementes 20 entspricht.

Dadurch wird sichergestellt, daß durch die Platten 2 bis 5 in Richtung der Platte 6 einwirkende Belastungen bei aufgerichteten Platten 2 bis 5, also eine Gebrauchsstellung, zuerst den Schwenkzapfen 11 bzw. die Endbereiche 18, 60 mit einer Mindestkraft vorbelastet und in den Nuten 17 verspannt werden, sodaß zusätzlich einem Verschieben oder Herausklappen der Platten 2 bis 5 aus den Nuten 17 der Platte 6 hin angehalten wird, wogegen darüber hinausgehende Belastungen, die zu einer Zerstörung der Schwenkzapfen 11 bzw. der Endbereiche 18, 60 führen könnten, durch die direkte Abstützung der die Seitenwände bildenden Platten 2 bis 5 aus den Lagergehäusen 14 vermieden werden können.

Diese Abmessungen können nun so ausgelegt sein, daß die Differenz zwischen der Dicke 89 und dem Maß 87 gleich groß ist, wie der Abstand 58 zwischen der Aufstandsfläche 54 und der Stützfläche 55 der Platten 2 bis 5 bzw. der Platte 6.

Zweckmäßig können diese Abmessungen aber auch unterschiedlich sein, sodaß je nach der auf die Platten 2 bis 5 einwirkenden, auf die den Boden bildende Platte 6 einwirkenden Kräfte wahlweise entweder zuerst zusätzlich über die Stirnkante 13 oder die Schwenkbegrenzer 53, und danach über den jeweiligen anderen Teil in die den Boden bildende Platte 6 eingeleitet werden.

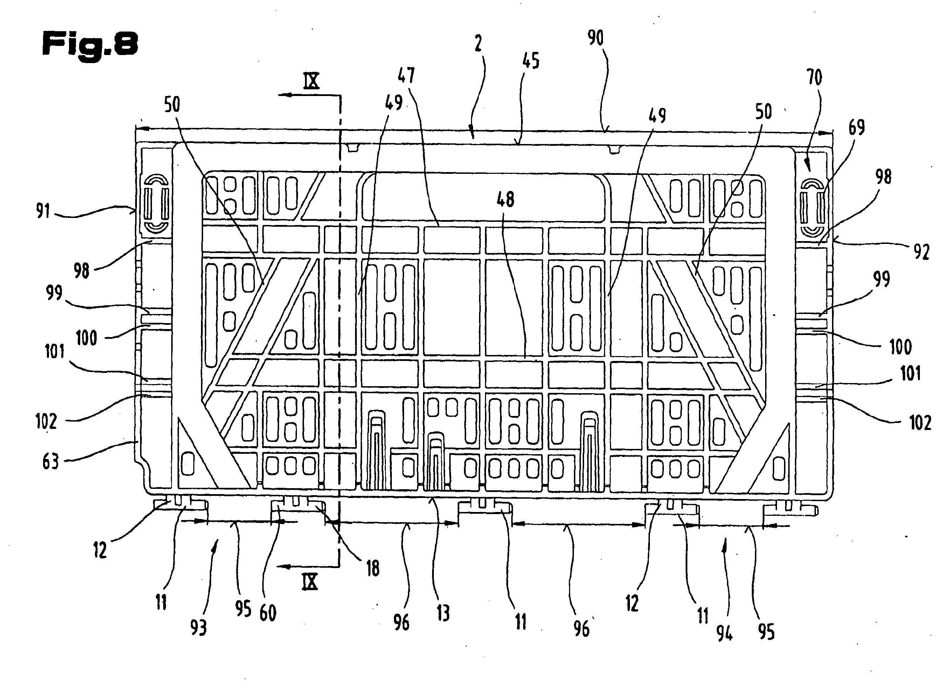

In den Figuren 8 bis 11 ist dann eine der Platten 2, 4 die die Querseitenwände des Behälters 1 bilden, im Detail dargestellt und beschrieben, wobei für ähnliche Teile wie bei den Platten 3, 5 die gleichen Bezugszeichen verwendet werden.

So weist diese Platte 2 wiederum einen Verstärkungsbügel 42 auf, welcher durch einen Hohlkörper gebildet ist und durch ein aus dem Stand der Technik bekanntes Verfahren hergestellt wurde, wie bereits in der detaillierten Beschreibung zu den Fig. 4 bis 7 ausführlich dargelegt wurde.

An der unteren Stirnkante 13 der Platte 2 sind wiederum mehrere Schwenkvorrichtungen 10 angeordnet, welche aus über Verbindungsstege 12 von der Stirnkante 13 distanzierte Schwenkzapfen 11 gebildet sind. Diese Schwenkzapfen 11 weisen die zwei Endbereiche 18, 60 auf, wobei diese in Richtung der Längserstreckung der Platte 2 beidseits über den Verbindungssteg 12 vorragen. Im Falle dieser Platte 2 ist über eine Breite 90 jeweils in Richtung von Schmalstirnseiten 91, 92 jeweils ein Schwenkzapfenpaar 93, 94 zugeordnet. Ein weiterer Schwenkzapfen 11 ist im Bereich der Stirnkante 13 dem Mittelbereich der Platte 2 zugeordnet. Eine Distanz 95 zwischen den Schwenkzapfen 11 der beiden Schwenkzapfenpaare 93, 94 ist geringer als eine Distanz 96 zwischen dem im Mittelbereich der Platte 2 zugeordneten Schwenkzapfen 11 und dem diesen Schwenkzapfen 11 benachbarten Schwenkzapfen 11 der beiden Schwenkzapfenpaare 93, 94.

Der zuvor erwähnte Verstärkungsbügel 42 verläuft entlang der Längsstirnseitenkante 45 der Platte 2, erstreckt sich dann beidseits der Platte 2 parallel zu den Schmalstirnseiten 91, 92 und springt beidseits der Platte 2 schräg in Richtung der Stirnkante 13 verlaufend in Richtung einer Mitte der Platte 2 vor und endet im Bereich der Randleiste 63 der Platte 2, wobei dieser Verstärkungsbügel 42 bzw. die der Stirnkante 13 zugewandten Endbereiche des Verstärkungsbügel 42 im Bereich der Distanz 95 zwischen den Schwenkzapfen 11 der Schwenkzapfenpaare 93, 94 angeordnet ist.

Weiters weist die Platte 2 ähnlich der Platte 3 Längsträger 47, 48, Diagonalstützen 50 und Vertikalträger 49 auf, wodurch eine bessere Lastabtragung über die Platte 2 in die als Boden ausgebildete Platte 6 erzielt wird. Durch die Anlenkung der weiteren stabförmigen Längsträger 47, 48 und Vertikalträger 49 sowie Diagonalstützen 50 kann eine sehr gute räumliche Aussteifung, aber vor allem eine hohe Vertikallast durch die Platten 2, 4, aufgenommen werden.

Im Bereich der Längsstirnseitenkante 45 sind wiederum Zentrierausnehmungen 51 angeordnet, die mit entsprechenden Zentriervorsprüngen in der den Boden bildenden Platte 6 des darüberliegenden Behälters 1 zusammenwirken können. Da in diesem Bereich eine relativ hohe Krafteinleitung durch den darüberliegenden Behälter 1 auftritt, enden die beiden aufeinander zugerichteten Diagonalstützen 50 etwa im Bereich dieser Zentrierausnehmungen 51, um die massiv auftretenden Kräfte gleichmäßig über die Querseitenwand bzw. über die zusätzlich angeordneten Längsträger 47, 48 und Vertikalstützen 49 gleichmäßig in die als Boden ausgebildete Platte 6 ableiten zu können. Zusätzlich wird durch die vorteilhafte Ausbildung der erfindungsgemäßen Schwenkvorrichtungen 10 eine Anordnung von mehreren Schwenkzapfen 11 möglich - wie dies im nachfolgenden noch detaillierter beschrieben werden wird -, wodurch eine Kraftableitung in die Platte 6, welche als Boden ausgebildet ist, wesentlich verbessert werden kann.

Die Kraftableitung in die als Boden ausgebildete Platte 6 wird dadurch noch verbessert, daß die der Stirnkante 13 zugewandten Endbereiche des Verstärkungsbügels 42 im Bereich der Distanzen 95 zwischen den Schwenkzapfen 11 der Schwenkzapfenpaare 93, 94 enden und so die über den Verstärkungsbügel 42 abgeleitete Kraft sich gleichmäßig auf die beiden Schwenkzapfen 11 der beiden Schwenkzapfenpaare 93, 94 verteilen kann und so eine Überbelastung eines einzelnen Schwenkzapfens 11 bzw. dessen Endbereiche 18, 60 vermieden werden kann.

Selbstverständlich wäre es bei der Ausbildung der Platten 2, 4 zusätzlich möglich, im Bereich der Distanzen 95, 96 Schwenkbegrenzer 53 anzuordnen, wie dies in der detaillierten Beschreibung der Platten 3, 5 angedeutet wurde, wobei die Vorteile einer derartigen Anordnung von Schwenkbegrenzung 53 der detaillierten Beschreibung zu den Fig. 4 bis 7 zu entnehmen ist.

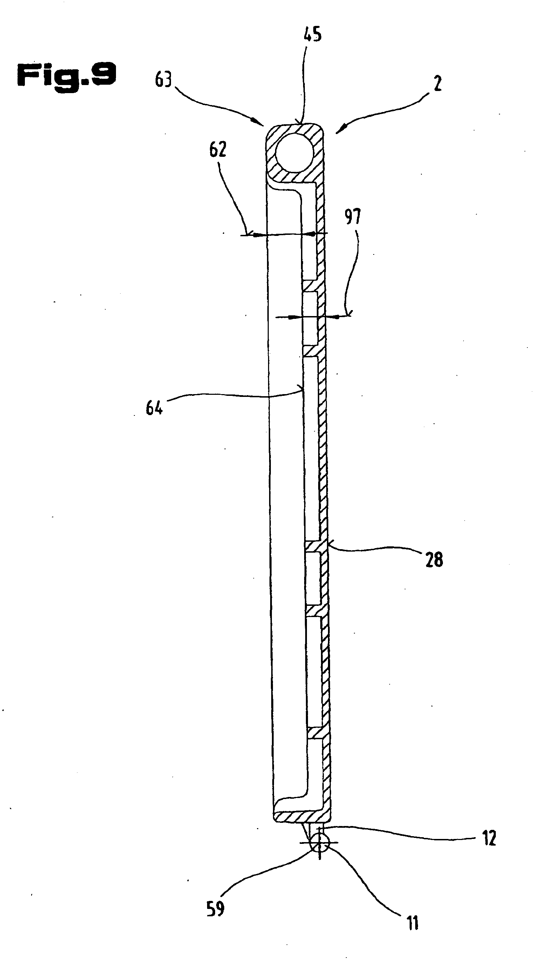

Die Platte 2 bzw. die Platten 2, 4 weisen nun im Bereich ihrer Schmalstirnseiten 91, 92 sich von der Randleiste 63 in Richtung des Verstärkungsbügels 42 erstreckende und über eine Dicke 97, die die Platten 2, 4 im Bereich zwischen dem Verstärkungsbügel 42 und der Schwenkvorrichtung 10 aufweisen - wie diese in der Fig. 9 dargestellt ist - vorragende Stütz- bzw. Zentrierelemente 98 bis 102 auf. Diese Stütz- bzw. Zentrierelemente 98 bis 102 wirken zur Verbesserung der Kraftableitung und Zentrierung im Verbindungsbereich der Platten 2, 4 mit den Platten 3, 5 mit den Stütz- bzw. Zentrierelementen 66 bis 68 der Anschlagleisten 29 der Platten 3, 5 zusammen, wie dies detailliert in der folgenden Beschreibung dargelegt wird.

Wie nun aus der Fig. 1 ersichtlich, weisen die Platten 2, 4 im Bereich der Schmalstirnseiten 91, 92 eine gegenüber der Dicke 34 verringerte Dicke 103 auf. Die Dicke 103 ist gegenüber der Dicke 34 um eine Dicke 104 der Anschlagleisten 29 der Platten 3, 5 geringer, um bei einem Eingreifen der Anschlagleisten 29 der Platten 3, 5 in die Randbereiche der Platten 2, 4 in einer die Platten 2 bis 5 untereinander verriegelnden Stellung im Bereich der Schmalstirnseiten 91, 92 der Platten 2, 4 die Dicke 34 nicht zu überschreiten. Durch diese vorteilhafte Ausbildung der Schmalstirnseiten 91, 92 der Platten 2, 4 ist es möglich, trotz der vorspringenden Anschlagleisten 29 der Platten 3, 5 keinen störenden Vorsprung in die Gebrauchsstellung des Behälters 1 auszubilden und so eine Handhabung derartiger Behälter 1 wesentlich erleichtert wird.

Weiters ist aus den Darstellungen der Fig. 8, 10, 11 zu entnehmen, daß im Bereich der Schmalstirnseiten 91, 92 der Platten 2, 4 zwischen der Randleiste 63 und dem Verstärkungsbügel 42 beidseits jeweils eine Verbindungsaufnahme der Verbindungsvorrichtung 70 zur Aufnahme des Verbindungselementes 69 angeordnet ist, wobei auf die genauere Ausführung dieser Verbindungsvorrichtung 70 in der nachfolgenden Beschreibung noch näher eingegangen wird.

Jede der Platten 2 bis 5 weist in etwa eine gleiche Dicke 34 auf. Bevorzugt ist dabei eine, in der Ebene der Innenfläche 28 verlaufende Achse 59 des Schwenkzapfens 11 in einem kleineren Abstand von der Innenfläche 28 angeordnet als die Hälfte der Dicke 34 der einzelnen Platten 2 bis 5. Die Dicke 34 der einzelnen Platten 2 bis 5 ergibt sich aus der Höhe 62, um die die außen umlaufende, die Platten 2 bis 5 begrenzende, Randleiste 63 über eine der Innenfläche 28 gegenüberliegende Außenfläche 64 der Platten 2 bis 5 vorragt, sowie der Dicke 97 der jeweiligen Platte 2, 4. Für die Versteifung der Platten 2 bis 5 sind innerhalb der, die Platten 2 bis 5 umgrenzenden Randleisten 63 die bereits genannten Längsträger 47, 48, Vertikalträger 49 und Diagonalstützen 50, wie am besten aus den Ansichten der Fig. 4, 6, 8, 10 und 11 ersichtlich, angeordnet. Wie weiters der Fig. 9 zu entnehmen ist, ist die Randleiste 63 im Bereich der von den Schwenkzapfen 11 gegenüberliegenden Längsstirnseitenkante 45 als Hohlprofil ausgebildet.

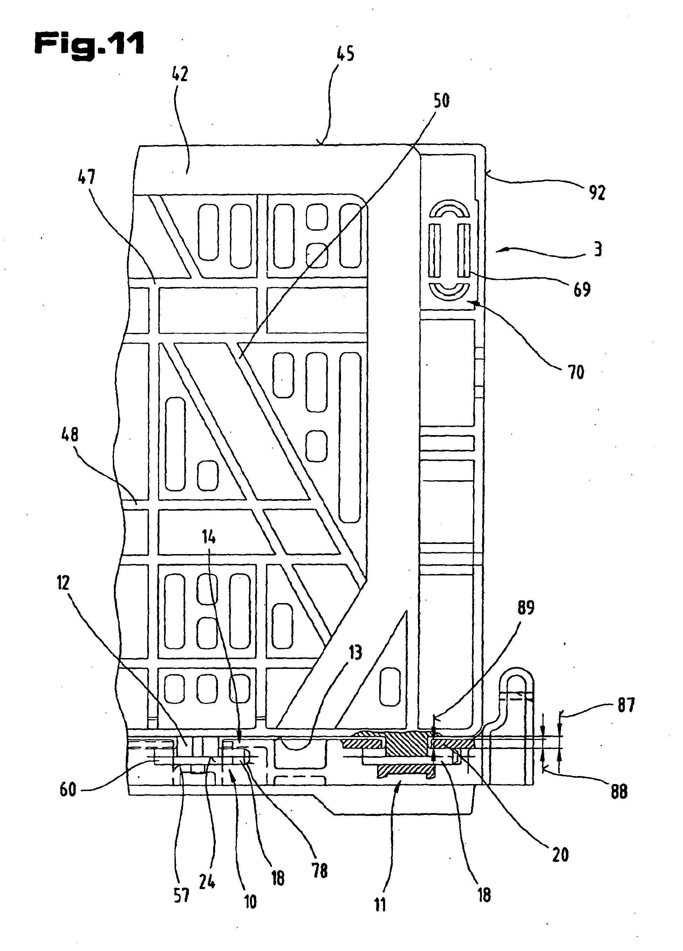

Wie besser der Fig. 11 zu entnehmen ist, ist der Verbindungssteg 12 derart bemessen, daß ein Maß 87 zwischen der Stirnkante 13 und einem diesen zugewandten nächstliegenden Oberflächenteil des Endbereiches 18 des Schwenkzapfens 11 geringfügig größer ist als eine Distanz 88 zwischen dem Endbereich 18 und der der Stirnkante 13 zugewandten Oberfläche des Verkleidungselementes 20, wobei die Distanz 88 an einem an dem Verkleidungselement 20 anliegenden Endbereich 18 einer Dicke 89 des Verkleidungselementes 20 entspricht.

Dadurch wird sichergestellt, daß durch die Platten 2 bis 5 in Richtung der Platte 6 einwirkende Belastungen bei aufgerichteten Platten 2 bis 5, also eine Gebrauchsstellung, zuerst die Schwenkzapfen 11 bzw. die Endbereiche 18, 60 mit einer Mindestkraft vorbelastet, und in den Nuten 17 verspannt werden, sodaß zusätzlich einem Verschieben oder Herausklappen der Platten 2 bis 5 aus den Nuten 17 der Platte 6 hin angehalten wird, wogegen darüber hinausgehende Belastungen, die zu einer Zerstörung der Schwenkzapfen 11 bzw. der Endbereiche 18, 60 führen könnten, durch die direkte Abstützung der Platten 2 bis 5 auf den Lagergehäusen 14 vermieden werden können.

Diese Abmessungen können nun so ausgelegt sein, daß die Differenz zwischen der Dicke 89 und dem Maß 87 gleich groß ist wie der Abstand 58 zwischen der Aufstandsfläche 54 und der Stützfläche 55 der Platten 2 bis 5 bzw. der Platte 6.

Zweckmäßig können diese Abmessungen aber auch unterschiedlich sein, sodaß je nach der auf die Platten 2 bis 5 einwirkenden, auf die den Boden bildende Platte 6 einwirkenden Kräfte wahlweise entweder zuerst zusätzlich über die Stirnkante 13 oder die Schwenkbegrenzer 53, und danach über den jeweiligen anderen Teil in die den Boden bildende Platte 6 eingeleitet werden.

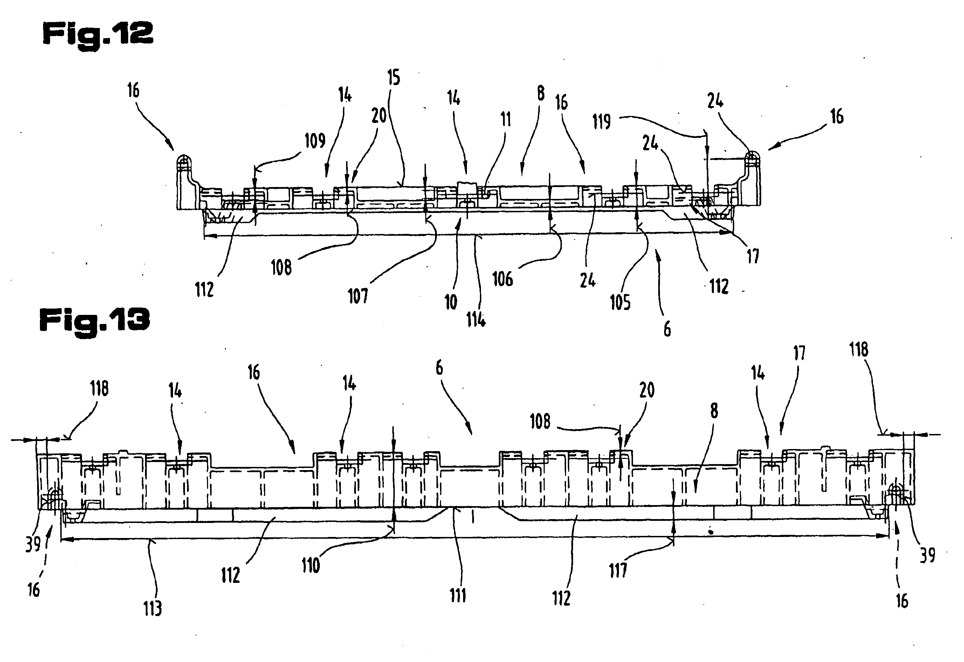

In den Fig. 12 und 13 ist nun die den Boden bildende Platte 6 in einer Stirn- bzw. Seitenansicht dargestellt. Hierbei ist zu ersehen, daß die als Boden ausgebildete Platte 6 für die Platten 2, 4 und 3, 5 Randleisten 16 mit unterschiedlichen Höhen aufweist.

Vorzugsweise entspricht eine Gesamtdicke 105 des Bodens und der Randleiste 16 mit den Lagergehäusen 14 im stirnseitigen Bereich der Platte 6 bzw. im Bereich zur Aufnahme der Platten 2, 4 einer Summe einer Dicke 106 der Platte 6 zuzüglich einer Dicke 107 des Schwenkzapfens 11 und einer Dicke 108 des Verkleidungselements 20, wobei vorzugsweise die Dicke 107 des Schwenkzapfens 11 der Schwenkvorrichtung 10 gleich groß einem Durchmesser 109 der den Schwenkzapfen 11 aufnehmenden Nut 17 ist. Weiters ist der Schwenkzapfen 11 auf den Platten 2 bis 5 in der Ebene der Innenfläche 28 verlaufende Achse 59 des Schwenkzapfens 11 in einem kleineren Abstand von der Innenfläche 28 der Platten 2 bis 5 angeordnet als die Hälfte der Dicke 34 der einzelnen Platten 2 bis 5. Durch diese vorteilhafte Ausbildung wird aufgrund der bestmöglichen Raumausnutzung für die einzuklappenden Platten 2 bis 5 die geringstmögliche Stapelhöhe für zu transportierende Behälter 1 erzielt, wodurch ein Transport dieser Behälter 1 sehr wirtschaftlich durchgeführt werden kann.

Der Darstellung der Fig. 13 ist zu entnehmen, daß eine Gesamtdicke 110 der Randleisten 16 mit den Lagergehäusen 14 für die Platten 3, 5 vorzugsweise um die Dicke 34 der Platten 2, 4 höher ist als eine Gesamtdicke 105 der Randleisten 16 mit den Lagergehäusen 14 im Bereich der Platten 2, 4. Durch diese Ausbildung wird ermöglicht, daß die Platten 3, 5 auf die bereits auf die als Boden ausgebildete Platte 6 eingeklappten Platten 2, 4 spielfrei aufgeklappt werden können und so die Stapelhöhe mehrerer Behälter 1 noch weiter optimiert werden kann.

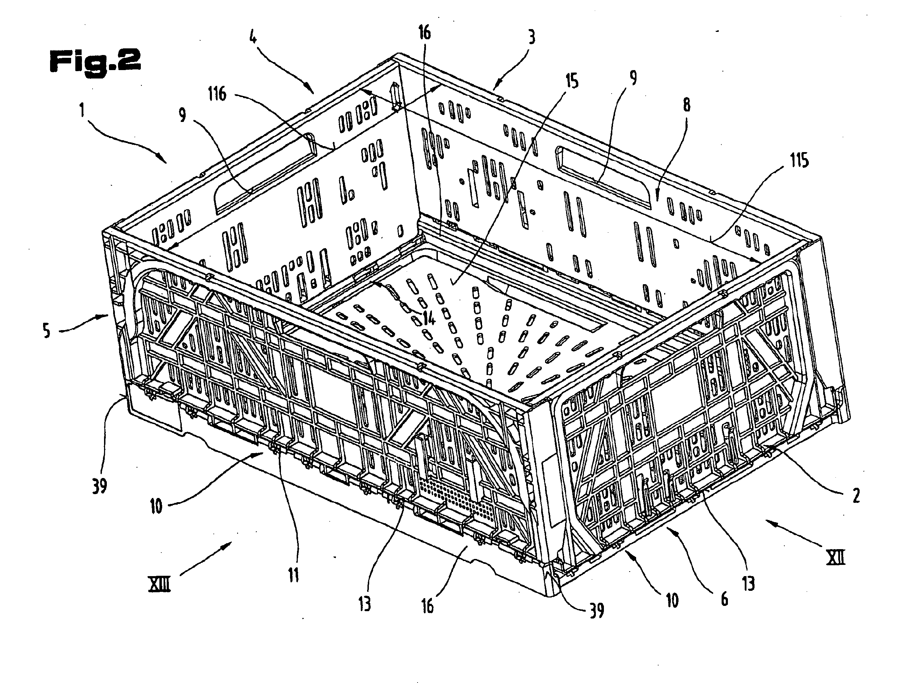

Weiters ist den Darstellungen zu entnehmen, daß die als Boden ausgebildete Platte 6 über eine Unterseite 111 vorragende Stege 112 aufweist, welche zum Abstellen der Behälter 1 auf einem Untergrund dienen soll. Dabei erstreckt sich ein Außenmaß 113 der Stege 112 in der Seitenansicht der Platte 6 und ein Außenmaß 114 der Stege 112 in der Stirnansicht der Platte 6, wobei das Außenmaß 113 in etwa einer Innenweite 115 zwischen Platten 2, 4 in ihrer aufgerichteten verriegelten Stellung - wie dies in der Fig. 2 veranschaulicht ist - entspricht und ein Außenmaß 114 in etwa einer Innenweite 116 zwischen den Platten 3, 5 in ihrer senkrecht aufgerichteten und verriegelten Stellung. Durch derart ausgestaltete Abmaße der Stege 112 wird ein Stapeln der Behälter 1 in ihrer Gebrauchsstellung, d.h. mit vertikal zur Platte 6 aufgerichteten Platten 2 bis 5, erleichtert und ein Verrutschen der gestapelten Behälter 1 in horizontaler Richtung gegeneinander gesichert dadurch vermieden, daß die Stege 112 mit einer Höhe 117 in den Innenraum 8 des darunterliegenden Behälters 1 eingreifen und so die Stege 112 von den Platten 2 bis 5 des darunterliegenden Behälters 1 umfaßt sind bzw. diese formflüssig anliegen.

Wie weiters aus der Darstellung der Fig. 13 zu entnehmen ist, springt die Randleiste 16 für die Platten 3, 5 um ein Maß 118 gegenüber den Stirnkanten 39 der Randleisten 16 für die Platten 2, 4 vor. Dieses Maß 118 entspricht in etwa der Dicke 104 der Anschlagleisten 29 der Platten 3, 5, wodurch eine ebene Stirnseite des in die Transportstellung geklappten Behälters 1 erzielt wird.

Wie der Darstellung der Fig. 12 zu entnehmen ist, sind die Längsmittelachsen 24 der zur Aufnahme der Schwenkzapfen 11 ausgebildeten Nuten 17 für die Platten 3, 5 gegenüber der Längsmittelachsen 24 der Nuten 17 für die Platten 2, 4 um eine Höhe 119, welche etwa einer Dicke 34 der Platten entspricht, beabstandet, wobei diese Höhe 119 ihren Wert im Falle einer Dickenänderung der Platten 2 bis 5 ebenfalls verändert, wodurch die Höhe 119 im Falle einer Erhöhung der Dicke 34 der Platten 2 bis 5 ebenfalls erhöht wird und im Gegensatz dazu bei einer Verringerung der Dicke 34 der Platten 2 bis 5 wird die Höhe 119 in einem in Relation zu dieser Dickenänderung der Platten 2 bis 5 maßverringert.

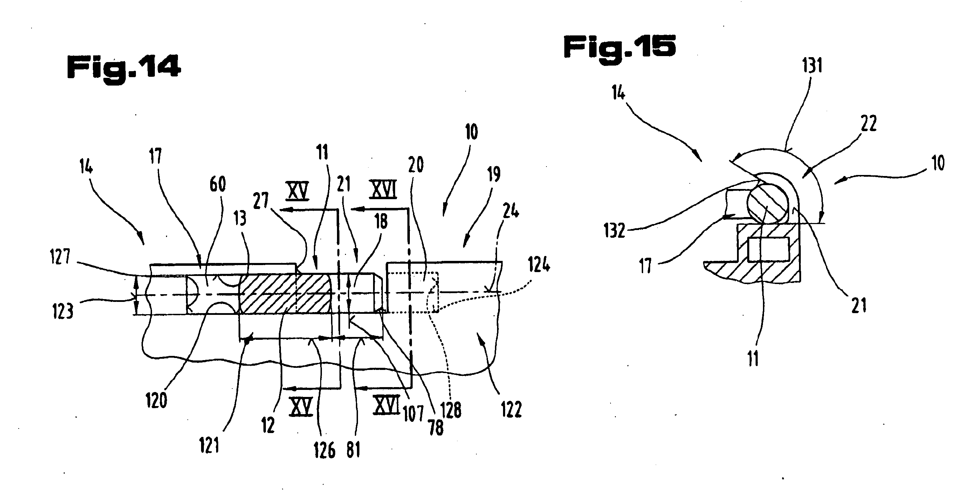

In den Fig. 14 bis 18 ist nun die Ausbildung einer erfindungsgemäßen Schwenkvorrichtung 10 mit in die Nut 17 eingesetztem Schwenkzapfen 11, welcher die Endbereiche 18, 60 aufweist, dargestellt.

Das Lagergehäuse 14 ist hier derart ausgeführt, daß der Schwenkzapfen 11 mit seinen beiden Endbereichen 18, 60 und der den Schwenkzapfen 11 mit jeweils einer Platte 2 bis 5 verbindender Verbindungssteg 12 dargestellt ist. Der Endbereich 18 des Schwenkzapfens 11 weist stirnseitig die konisch verlaufende Führungsfläche 78 auf, wobei dieser Führungsfläche 78 benachbart der Halteansatz 19 der Nut 17 angeordnet ist, welcher zur Aufnahme des Endbereiches 18 des Schwenkzapfens 11 dient.

Grundsätzlich sei festgehalten, daß die Platten 2 bis 5 über im Bereich der als Boden ausgebildeten Platte 6 zugewandten Stirnkanten 13 der Platten 2 bis 5 Schwenkvorrichtungen 10 aufweisen und in ihre aufgerichtete Stellung verstellbar verbunden sind und zumindest ein parallel zu einer Stirnkante 13 einer Platte 2 bis 5 verlaufender Schwenkzapfen 11 von der dieser zugewandten Stirnkante 13 der Platte 2 bis 5 über einen Verbindungssteg 12 distanziert gehaltert ist und in die Nut 17 einer anderen Platte 6 einsetzbar ist. Die Nut 17 weist einen Nutengrund 120 auf, welcher konkav ausgebildet ist, wobei die Nut 17 zwei Endbereiche 121, 122 aufweist und der Endbereich 122 über einen Durchmesser 123 der Nut 17 verlaufend durch den Halteansatz 19 bzw. das Verkleidungselement 20 geschlossen ist und eine Aufnahmekammer 124 für den Endbereich 18 des Schwenkzapfens 11 bildet.

Wie aus den Darstellungen ersichtlich, ist ein Durchmesser 123 der Nut 17 vorzugsweise gleich groß einem Durchmesser 107 des Schwenkzapfens 11, wodurch ein spielfreier Sitz des Schwenkzapfens 11 in der Nut 17 bzw. dem durch das Verkleidungselement 20 geschlossenen Halteansatz 19 gewährleistet wird. Die Nut 17 ist nun zumindest in Teilbereichen in einem Lagergehäuse 14, in einer über die Platte 6 vorragenden Randleiste 16 angeordnet und weist die offene Länge 25 auf, die zumindest der Länge 26 des Schwenkzapfens 11 entspricht. Im Bereich der Seitenwange 22 der Nut 17 ist in einem Schwenkbereich des Verbindungssteges 12 um eine Längsmittelachse 24 der Nut 17 freigebende und in radialer Richtung verlaufende Ausnehmung 21 angeordnet, die in Richtung der Längsmittelachse 24 der Nut 17 durch den Halteansatz 19 und durch den Anschlag 27 begrenzt ist. Ein Abstand 125 zwischen dem Halteansatz 19 und dem Anschlag 27 ist zumindest gleich einer in Richtung der Längsmittelachse 24 gemessenen Länge 126 des Verbindungssteges 12 jedoch nicht größer als die Länge 126 des Verbindungssteges 12 plus der Zapfenlänge 81 des über diesen in gleicher Richtung vorragenden Endbereich 18 des Schwenkzapfens 11 ist.

Die schwenkbare Verbindung zwischen der Nut 17 und dem Schwenkzapfen 11 und somit zwischen zwei Platten 2 bis 6 wird nun, wie folgt, durchgeführt. Der gesamte Schwenkzapfen 11 weist eine Länge 26 auf, welche gleich oder geringfügig kleiner einer offenen Länge 25 der Nut 17 ausgebildet ist und so kann der Schwenkzapfen 11 in die Nut 17 eingesetzt werden. Dies erfolgt in einer winkeligen Lage des Verbindungssteges 12, wobei die Stellung zum Zusammensetzen der Schwenkvorrichtung 10 nicht der Gebrauchsstellung des Behälters 1 entsprechen soll. Nach dem Einsetzen des Schwenkzapfens 11 in die Nut 17 liegt nun der Endbereich 60 des Schwenkzapfens 11 an einer inneren Stirnkante 127 der Nut 17 an und ist so in entgegengesetzter Richtung zum Halteansatz 19 in seiner Lage fixiert. Eine Bewegung des Schwenkzapfens 11 quer zur Längserstreckung der Nut 17 wird dadurch verhindert, daß ein Durchmesser 123 der Nut 17 gleich groß einem Durchmesser 107 des Schwenkzapfens 11 ist und so der Schwenkzapfen 11 und die Nut 17 die gleiche Längsmittelachse 24 aufweisen.

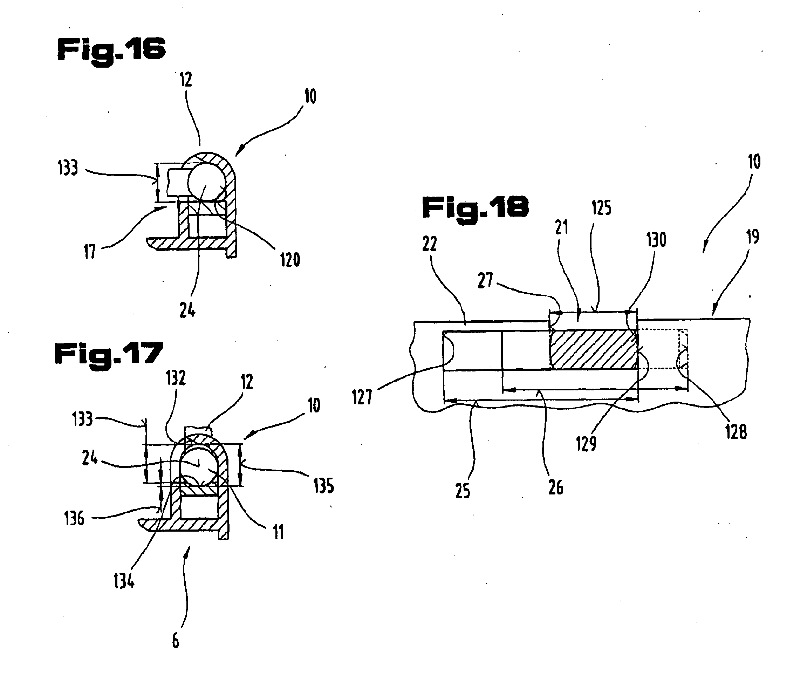

Ist nun der Schwenkzapfen 11 über die offene Länge 25 der Nut 17 in die Nut 17 eingesetzt, sind die Schwenkzapfen 11 in den Nuten 17 derart geführt, daß eine Relativbewegung der Schwenkzapfen 11 in den Nuten 17 entlang der Längsmittelachse 24 in Richtung des Halteansatzes 19 ermöglicht wird. Werden nun die Schwenkzapfen 11 in Richtung des Endbereiches 122 der Nut 17 verschoben, so dringt der Endbereich 18 des Schwenkzapfens 11 in die Aufnahmekammer 124 des durch das Verkleidungselement 20 umlaufend geschlossenen Halteansatz 19 ein, wobei dieser Vorgang durch die Anordnung der Führungsfläche 78 auf dem Endbereich 18 des Schwenkzapfens 11 wesentlich erleichtert werden kann. Vorzugsweise kommt nun der Endbereich 18 des Stirnzapfens 11 an einer inneren Stirnkante 128 der Aufnahmekammer 124 zur Anlage, wobei jedoch auch eine Distanz zwischen diesen möglich sein kann, da eine dem Halteansatz 19 zugewandte Stirnseite 129 des Verbindungssteges 12 an einer dem Verbindungssteg 12 zugewandten Stirnfläche 130 des Halteansatzes 19 zur Anlage kommt und durch diesen geführt wird, wie der Darstellung der Fig. 18 zu entnehmen ist.

Zwischen der Stirnfläche 130 des Halteansatzes 19 und dem Anschlag 27 der Seitenwange 22 der Nut 17 ist nun die radial umlaufende Ausnehmung 21 angeordnet. Da die parallel zur Längsmittelachse 24 gemessene Länge 126 des Verbindungssteges 12 gleich groß bzw. geringfügig kleiner einem Abstand 125 zwischen der Stirnfläche 130 des Halteansatzes 19 und dem Anschlag 27 der Seitenwange 22 der Nut 17 ist, wird ein Drehen des Schwenkzapfens 11 in der Nut 17 bzw. ein Verschwenken des Verbindungssteges 12 gegenüber der in die Nut 17 eingesetzten Lage des Verbindungssteges 12 ermöglicht.

Hierzu sei festgehalten, daß eine Bogenlänge 131 der Ausnehmung 21 entscheidend für das Maß der Verschwenkung des Verbindungssteges 12 ist und so der Schwenkbereich einer dem Schwenkzapfen 11 und dem Verbindungssteg 12 aufweisenden Platte 2 bis 5 über diese Ausnehmung beschränkt wird. So ist es bei dieser vorteilhaften Ausbildung möglich, durch andere Formgebung die Bogenlänge 131 der Ausnehmung 21 zu verringern bzw. zu vergrößern, wodurch eine Verringerung bzw. Vergrößerung des Schwenkbereiches einer Platte 2 bis 5 abgestimmt werden kann.

Wie aus den Darstellungen der Fig. 15 bis 17 ersichtlich, weist eine dem offenen Ende der Nut 17 zugewandter Endbereich der Seitenwange 22 eine in Richtung der Längsmittelachse 24 verlaufende Schrägfläche 132 auf, wobei durch diese Schrägfläche 132 ein Einsetzen der Schwenkzapfen 11 in die Nut 17 erleichtern soll. Weiters ist es möglich, wie der Fig. 17 zu entnehmen ist, eine Öffnungsweite 133 der Nut 17 geringfügig kleiner dem Durchmesser 107 des Schwenkzapfens 11 auszubilden, wodurch der Schwenkzapfen 11 in die Nut 17 einschnappt und ein selbständiges Austreten des Schwenkzapfens 11, auf der Nut 17 gesichert vermieden werden kann.

In der Fig. 17 ist nun eine andere Ausführungsvariante für die Nut 17 zur Aufnahme des Schwenkzapfens 11 dargestellt. Die Ausbildung entspricht weitgehend der Darstellung der Fig. 16, wobei hierbei dem Verkleidungselement 20 gegenüberliegend eine Ausnehmung 134 angeordnet ist, welche an den Hüllkreis des Schwenkzapfens 11 angepaßt ist und so der Schwenkzapfen 11 vollflächig in dieser Ausnehmung 134 aufliegt. Durch diese Ausbildung wird eine Höhe 135 der Nut 17 bzw. der Aufnahmekammer 124 im Bereich der Längsmittelachse 24 vergrößert. Dies führt dazu, daß die Längsmittelachse 24 gegenüber einem Mittel der Öffnungsweite 133 versetzt wird und so zum Herausnehmen des Schwenkzapfens 11 aus der Nut 17 dieser um einen Betrag 136, welcher der Tiefe der Ausnehmung 134 entspricht, angehoben werden muß.

Die gezeigte Stellung des Schwenkzapfens 11 bzw. des Verbindungssteges 12 spiegelt die Gebrauchsstellung der Schwenkvorrichtung 10, d.h. die Stellung bei in vertikaler Lage der Platten 2 bis 5 zur Platte 6 aufgerichteten Gebrauchsstellung, wieder. In dieser Stellung wird bei übereinander gestapelten Behältern 1 die größte Kraft auf die Schwenkvorrichtungen 10 bzw. die Schwenkzapfen 11 ausgeübt, wodurch sich zwischen dem Nutengrund 120 und der diesen Nutengrund 120 zugeordneten Außenfläche des Schwenkzapfens 11 eine hohe Flächenpressung aufbaut. Diese Flächenpressung wirkt einem Austreten des Schwenkzapfens 11 aus der Nut 17 entgegen, wie es durch widrige Umstände ,z.B. durch Schläge auf die Platten 2 bis 5 von außen usw., hervorgerufen werden könnte.

Vorteilhaft bei der Ausführung nach Fig. 17 ist nun, daß der Schwenkzapfen 11 in der Ausnehmung 134 eine größere Auflagefläche erhält und so die Übertragung der Kräfte von den Schwenkzapfen 11 auf die Platte 6 wesentlich verbessert werden kann. Zusätzlich muß bei widrigen Umständen wie z.B. Schläge von außen auf die Platten 5 bis 7 der belastete Schwenkzapfen 11 zuerst den Betrag 136 der Ausnehmung 134 überwinden, um aus der Nut 17 austreten zu können, wodurch durch diese Ausbildung ein derartiges Austreten aus der Nut 17 wesentlich erschwert wird. Weiters wird durch die vergrößerte Auflagefläche der Schwenkzapfen 11 in den Nuten 17 die mögliche Kraftaufnahme bzw. Kraftableitung über die Schwenkzapfen 11 in die Platte 6 verbessert bzw. vergrößert und weiters wirkt sich diese Ausbildung positiv auf die Lebensdauer derartiger Schwenkvorrichtungen aus.

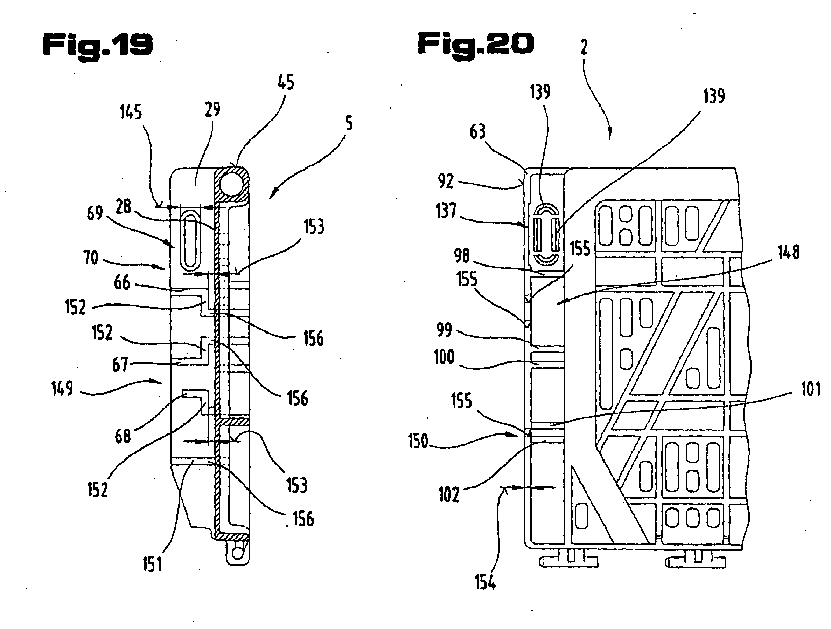

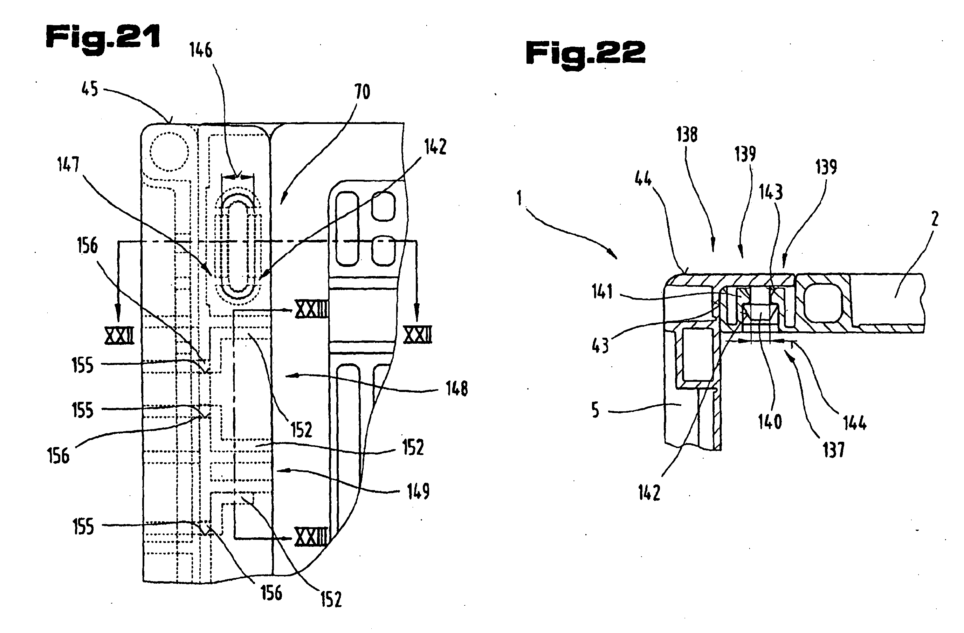

In den Fig. 19 bis 22 ist nun im Detail die Verbindungsvorrichtung 70 dargestellt und beschrieben. Die Beschreibung erfolgt beispielhaft für eine Platte 5, welche das auf der Anschlagleiste 29 einteilig angeformte Verbindungselement 69 aufweist und anhand einem Teilbereich der Platte 2, wobei diese Platte 2 im Bereich der Randleiste 63 eine Verbindungsaufnahme 137, welche mit dem Verbindungselement 69 korrespondiert, aufweist. Diese Ausführung ist nicht auf die hier beschriebene Variante beschränkt, sondern kann in sämtlichen Eckbereichen des Behälters 1 angeordnet sein.

Die detaillierte Ausführung der beispielhaft gewählten Platte 5 bzw. Platte 2 ist der detaillierten vorangegangenen Beschreibung der jeweiligen Platten 2, 5 zu entnehmen.

Der Eckbereich eines derartigen Behälters 1 weist durch die Ausbildung der Platten 2, 5 einen Überdeckungsbereich 138 zwischen den Schmalstirnseiten 44, 92 der beiden Platte 2, 5 auf, wobei hier die Verbindungsvorrichtung 70 zum lösbaren Verbinden der Platten 2, 5 in einer etwa zur den Boden bildenden Platte 6 senkrecht verlaufenden Stellung der Platten 2, 5 dient, die einem selbsttätigen Lösen der Verbindung zwischen den Platten 2, 5 entgegenwirkt.

Die Anschlagleiste 29 der Platte 5 weist, wie bereits zuvor beschrieben, auf ihrer der Längsmitte der Platte 5 zugewandten Seite die Stütz- bzw. Zentrierelemente 66 bis 68 auf. Zwischen dem Stütz- bzw. Zentrierelement 66 und der Längsstirnseitenkante 45 der Platte 5 ist nun das Verbindungselement 69 angeordnet. Dem gegenüber weist der Randbereich der Platte 2, welcher einen Überdeckungsbereich 138 mit der Platte 5 bildet, die in kongruenter Anordnung zugeordnete Verbindungsaufnahme 137 mit elastisch verformbaren Rückhalteelementen 139 auf.

Das Verbindungselement 69 ist durch einen pilzkopfartigen Fortsatz 140 gebildet, wobei dem gegenüber die Verbindungsaufnahme 137 bzw. die Rückhalteelemente 139 Vorsprünge 141 zum Hintergreifen des pilzkopfartigen Fortsatzes 140 aufweist. Grundsätzlich sei festgehalten, daß das Verbindungselement 69 jedmögliche Form bzw. jedmögliche winkelige Lage in bezug auf die Höhenerstreckung der Anschlagleiste 29 ausbilden kann und die Verbindungsaufnahme 137 in kongruenter Ausbildung im Randbereich der Platte 2 angeordnet ist. Selbstverständlich ist es auch möglich, daß mehrere über die Höhenerstreckung der Anschlagleiste 29 verteilte Verbindungselemente 69 bzw. Verbindungsvorrichtungen 70 angeordnet sind, um so die Verbindung der beiden Platten 2, 5 in ihrem Eckbereich zu verbessern.

Zum Verbinden des Verbindungselementes 69 mit der Verbindungsaufnahme 137 wird vorerst die Platte 5 bzw. die Platten 3, 5 in eine in etwa vertikal zur Platte 6 verlaufende Stellung verbracht und danach die Platten 2, 4 in ihre Gebrauchsstellung hochgeschwenkt. Treffen nun die Verbindungselemente 69 auf die Verbindungsaufnahmen 137, so greifen diese mit einer konischen Führungsfläche 142 in eine konische Aufnahme 143 der Verbindungsaufnahme 137 ein. Weiters greift nun die konische Führungsfläche 142 des Fortsatzes 140 in die in gleicher Weise konisch verlaufende Aufnahme 143 der Verbindungsaufnahme 137 ein und werden durch eine Krafteinbringung über den Fortsatz 140 die Rückhalteelemente 139 entgegengesetzt zum Fortsatz 140 erweitert, wodurch eine Öffnungsweite 144 der Verbindungsaufnahme 137 vergrößert wird.

Vorteilhaft hierbei ist, wenn eine stirnseitige Weite 145 des Fortsatzes 140 geringer ist einer dieser Stirnseite des Fortsatzes 140 zugewandten Öffnungsbreite 146 der Rückhalteelemente 139. Durch diese vorteilhafte Ausbildung ist es möglich, vor einem Einschnappen des Fortsatzes 140 in die Verbindungsaufnahme 137 diesen in die richtige Stellung zu zentrieren und so eine Verbindung zwischen den Platten 2, 4 mit den Platten 3, 5 zu erleichtern. Grundsätzlich sei festgehalten, daß diese Anordnung für alle möglichen Formen der Verbindungselemente 69 bzw. Verbindungsaufnahmen 37 Gültigkeit hat, wobei die Verbindungselemente 69 bzw. Verbindungsaufnahmen 137 kreisförmig, quadratisch bzw. mehreckig ausgebildet sein können. Die federnde Ausbildung der Rückhalteelemente 139 wird durch die Elastizität des Kunststoffmaterials und durch die Anordnung von einer beliebigen Anzahl von Ausnehmungen 147 entlang der Rückhalteelemente 139 erzielt.

Wird nun der Fortsatz 140 in die Verbindungsaufnahme 137 eingeführt, so werden die Rückhalteelemente 139 entgegengesetzt zum Fortsatz 140 erweitert, wobei sie an der Führungsfläche 142 des Fortsatzes 140 entlanggleiten und bei abgeschlossener Verbindung der Seitenwände 2, 5 den Fortsatz 140 hintergreifen und so ein selbsttätiges Lösen der Platte 2 von der Platte 5 verhindert wird.

Durch die elastisch verformbare Ausbildung der Rückhalteelemente 139 der Verbindungsaufnahme 137 wird gewährleistet, daß die Verbindungsvorrichtung 70 bedarfsweise wieder gelöst werden kann, wobei die Kraftaufbringung in entgegengesetzter Richtung, wie zuvor beschrieben, aufgebracht werden muß. Um dies zu erleichtern, kann auf den Rückhalteelementen 139 auf der der konischen Aufnahme 143 gegenüberliegenden Seite wiederum eine konische Führungsfläche angeordnet sein.

Wie nun weiters aus den Fig. 19 und 20 zu ersehen ist, sind auf der Anschlagleiste 29 der Platte 5 bzw. im Randbereich der Platte 2 die Stütz- bzw. Zentrierelemente 66 bis 68 bzw. die Stütz- bzw. Zentrierelemente 98 bis 102 angeordnet. Hierzu sei festgehalten, daß die Stütz- bzw. Zentrierelemente 66 bis 68 und 98 bis 102 in den ihnen zugeordneten Bereichen der Platten 2, 5 bzw. 3, 4 in mehreren unterschiedlich zueinander verlaufenden Raumrichtungen aneinander anliegen. Zur Erzielung dieses Effektes können die Stütz- bzw. Zentrierelemente 66 bis 68 und 98 bis 102 jedmöglichen Formenverlauf aufweisen, vorzugsweise jedoch S-förmig oder L-förmig ausgebildet sein, jedoch können auch gerade Stege zur Anwendung als Stütz- bzw. Zentrierelemente 66 bis 68 und 98 bis 102 ausgebildet sein.

Die Stütz- bzw. Zentrierelemente 98, 99 bilden in den Randbereichen der Platten 2, 4 eine Stützaufnahme 148 für die in verriegeltem Zustand der beiden Platten 2, 5 zwischen die Stütz- bzw. Zentrierelemente 98, 99 eingreifenden Stütz- bzw. Zentrierelemente 66, 67 welche auf der Anschlagleiste 29 der Platte 5 angeordnet sind, aus. Demgegenüber, um eine Lastabtragung bzw. Zentrierung zwischen den Platten 2; 4 und 3, 5 zu verbessern, bilden nun die beiden Stütz- bzw. Zentrierelemente 67, 68 eine Stützaufnahme 149 für die Stütz- bzw. Zentrierelemente 99, 100 der Platte 2, 4. Des weiteren bilden nun wieder die Stütz- bzw. Zentrierelemente 101, 102 eine weitere Stützaufnahme 150 für ein weiteres Stütz- bzw. Zentrierelement 151 auf der Anschlagleiste 29 der Platten 3, 5.

Durch ihren räumlichen Verlauf weisen die Stütz- bzw. Zentrierelemente 66 bis 68 parallel zu einer Höhenerstreckung der Platte 5 verlaufende Übergangsbereiche 152 auf, die von der Innenfläche 28 der Platte 5 um einen Abstand 153 distanziert sind. Um eine gesicherte Arretierung bzw. Fixierung der Platten 2, 4 mit den Platten 3, 5 zu gewährleisten, ist der Abstand 153 gleich groß einer Dicke 154 der Randleiste 63 der Platten 2, 4, wodurch die den Übergangsbereichen 152 der Platte 3, 5 zugeordneten Bereiche der Randleiste 63 der Platten 2, 4 formschlüssig zwischen der Innenfläche 28 und den Übergangsbereichen 152 an- bzw. einliegen.

In der Randleiste 63 der Platten 2, 4 sind nun Einformungen 155 angeordnet, welche zur Aufnahme von Teilbereichen 156 der Stütz- bzw. Zentrierelemente 66, 67, 151 dienen, wobei eine Tiefe dieser Einformungen 155 einer senkrecht zur Anschlagleiste 29 gemessenen Höhe der Teilbereiche 156 der Stütz- bzw. Zentrierelemente 66, 67, 151 entspricht.

Durch das Zusammenwirken der Stütz- bzw. Zentrierelemente 66 bis 68 und 151 mit den Stütz- bzw. Zentrierelementen 98 bis 102 und durch das Eingreifen der Teilbereiche 156 in die Einformungen 155 wird ein stabiler Verbund der einzelnen Platten 2, 4 mit den Platten 3, 5 erzielt, wodurch einerseits die Kraftableitung der sich überlappenden Platten 2, 5 und 3, 4 verbessert wird und zusätzlich läßt sich eine Stabilität des gesamten Behälters 1 durch derartige Anordnungen wesentlich erhöhen.

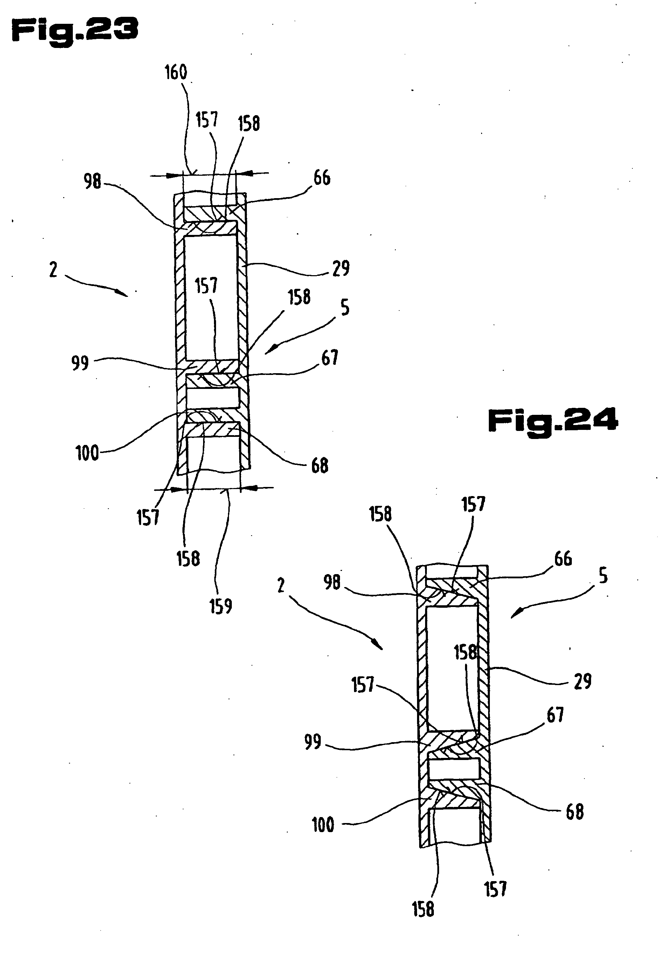

In den Fig. 23 und 24 sind nun die Überlappungsbereiche der Stütz- bzw. Zentrierelemente 66 bis 68 der Platte 5 mit den Stütz- bzw. Zentrierelementen 98 bis 100 der Platte 2 im Detail dargestellt.

Aus der Darstellung der Fig. 23 ist ersichtlich, daß Außenseiten 157 der Stütz- bzw. Zentrierelemente 98 bis 100 formschlüssig an Außenseiten 158 der Stütz- bzw. Zentrierelemente 66 bis 68 der Anschlagleiste 29 anliegen. Vorteilhaft bei einer derartigen Ausführung ist hierbei, wenn eine Höhe 159 der Stütz- bzw. Zentrierelemente 98 bis 100 gleich einer Höhe 160 der Stütz- bzw. Zentrierelemente 66 bis 68 ist, wodurch die bestmögliche Lastabtragung über deren Außenseiten 157, 158 ermöglicht wird. Weiters wird dadurch eine wünschenswerte Stabilität des Behälters 1 wesentlich erhöht. Ein zusätzlicher Vorteil dieser Ausbildung liegt darin, daß die Stütz- bzw. Zentrierelemente 98 bis 100 und 66 bis 68 durch das Anliegen an der jeweils gegenüberliegenden Platte 2, 5 auch eine gewisse Abstützfunktion übernehmen, wodurch ein Verformen der Anschlagleiste 29 der Platte 5 durch Krafteinwirkung von außen gesichert vermieden werden kann.

Wie weiters in Fig. 24 ersichtlich, ist es möglich, die Außenseiten 157, 158 derart als Schrägflächen auszubilden, daß diese in verbundenem Zustand der Platte 2 mit der Platte 5 korrespondierend ineinander greifen. Hierzu ist es möglich, daß die Stütz- bzw. Zentrierelemente 98 bis 100 der Platte 2 in Richtung der Anschlagleiste 29 der Platte 5 verjüngend verlaufen und demgegenüber die Stütz- bzw. Zentrierelemente 66 bis 68 der Anschlagleiste 29 der Platte 5 ebenfalls in Richtung der Platte 2 verjüngend verlaufen.

Durch diese vorteilhafte Ausbildung ist es möglich, beim Zusammenführen der Platte 2 mit der Platte 5 bzw. mit deren Anschlagleiste 29 im Falle einer leichten Verschiebung der Platte 2 gegenüber der Platte 5 diese optimal gegenüber der anderen Platte 5 zu zentrieren, wodurch auch ein wie bereits zuvor beschriebenes Einführen des Verbindungselementes 69 in die Verbindungsaufnahme 137 der Verbindungsvorrichtung 70 erleichtert wird.

Grundsätzlich sei festgehalten, daß die Stütz- bzw. Zentrierelemente 66 bis 68 L-förmig ausgebildet sind und die Übergangsbereiche 152 bzw. die Teilbereiche 156 rechtwinkelig an die Stütz- bzw. Zentrierelemente 66 bis 68 anschließen. Durch diese Raumform läßt sich eine wesentlich höhere Stabilität der Stütz- bzw. Zentrierelemente 66 bis 68 erreichen, wie dies aus Fig. 19 ersichtlich ist.

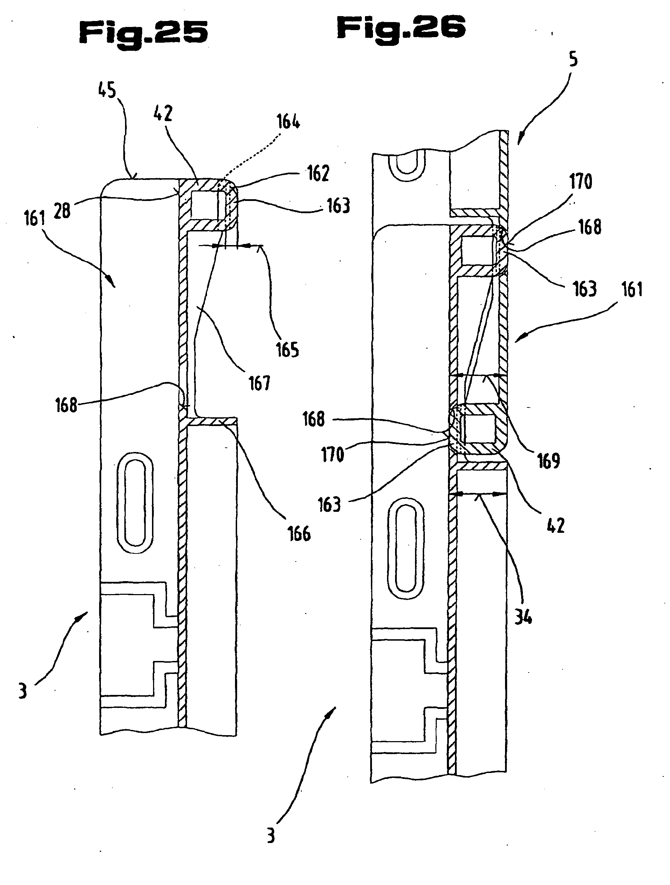

In den Fig. 25 und 26 ist nun ein Überlappungsbereich 161 von Platten 3, 5 gezeigt.

Falls nun eine Summe der Höhen der Platten 3, 5 größer ist als eine stirnseitig gemessene Breite der den Boden bildenden Platte 6, ist es notwendig, einen Überlappungsbereich 161 herzustellen, in dem die Platten 3, 5 ineinander greifen, ohne daß jedoch eine Dicke 34 der Platten 3, 5 im Überlappungsbereich 161 erhöht wird, um die Stapelhöhe von Behältern 1 in der Transportstellung nicht zu vergrößern. Die Platten 3, 5 weisen wiederum in ihrem oberen Endbereich bzw. im Bereich der Längsstirnseitenkante 45 den Verstärkungsbügel 42 auf, wobei das als Verstärkungsbügel 42 ausgebildete Hohlprofil auf der der Innenfläche 28 abgewandten Seite bereichsweise Einformungen 162 entlang der Längserstreckung des Verstärkungsbügels 42 aufweist, wodurch sich entlang der Längserstreckung des Verstärkungsbügels 42 Vorsprünge 163 ausbilden. Weiters weist der Verstärkungsbügel 42 entlang seiner Längserstreckungen weitere Ausnehmungen 164 auf, wobei eine Tiefe dieser Ausnehmungen 164 größer einer Wandstärke 165 des Hohlprofils des Verstärkungsbügels 42 ist.

Zur Erhöhung der Stabilität des Überlappungsbereiches 161 der Platte 3, 5 sind auf der der Innenfläche 28 gegenüberliegenden Seite der Platte 3 vom Verstärkungsbügel 42 in Richtung einer Verstärkungsleiste 166 verlaufende, über die Längserstreckung der Platten 3, 5 verteilte Verstärkungsrippen 167 einteilig an die Platte 3 angeformt, wobei die Verstärkungsrippen 167 vom Verstärkungsbügel 42 weg verjüngend in Richtung der Innenfläche 28 der Platte 3 verlaufen und in einem der Verstärkungsleiste 166 zugewandten Endbereich parallel zur Innenfläche 28 der Platte 3 verlaufen. Der Verstärkungsleiste 166 in Richtung des Verstärkungsbügels 42 benachbart ist ein die Platte 3 durchbrechender und über die gesamte Längserstreckung der Platte 3 verlaufender und durch die Anschlagleisten 29 der Platte 3 begrenzter Durchbruch 168 angeordnet. Dieser Durchbruch 168 wird von den zwischen dem Verstärkungsbügel 42 und der Verstärkungsleiste 166 angeordneten Verstärkungsrippen 167 überspannt, wodurch durch den Durchbruch 168 die Stabilität der Platte 3, 5 nicht vermindert wird.

Werden nun zwei gleichartig ausgestaltete Platten 3, 5 im Überlappungsbereich 161 übereinander geklappt, so greifen die Vorsprünge 163 des Verstärkungsbügels 42 in den Durchbruch 168 ein und schließen jeweils mit der Innenfläche 28 der Platten 3, 5 bündig ab. Durch diese vorteilhafte Ausbildung wird ermöglicht, daß eine ausreichende Abstützwirkung des Verstärkungsbügels 42 gegenüber den Seitenwänden 3, 5 bei mehreren im Transportzustand übereinander gestapelten Behältern 1 gewährleistet ist.

Um nun eine ausreichende Querstabilität der Behälter 1 bzw. der Platten 3, 5 zu erzielen, greifen die zwischen den Verstärkungsbügeln 42 und den Verstärkungsleisten 166 angeordneten Verstärkungsrippen 167 in die mit ihnen korrespondierenden Ausnehmungen 164 in den Verstärkungsbügeln 42 bei herangeklappten Platten 3, 5 ein, wobei die Ausmaße der Ausnehmungen 164, sprich die Breite, in etwa einer Dicke der Verstärkungsrippen 167 entspricht.

Um die Stapelhöhe mehrerer zusammengeklappter Behälter 1 nicht unnötig zu vergrößern, überlappen sich die die Seitenwände bildenden Platten 3, 5 in ihrer auf der den Boden bildenden Platte 6 aufliegenden Transportstellung einander und eine Dicke 169 der übereinanderliegenden Platten 3, 5 ist nicht größer als die Dicke 34 einer einzelnen der Platten 2 bis 5. Weiters greift eine Außenseitenfläche 170 des Verstärkungsbügels 42 in eine gegenläufig verlaufende Nut im Verstärkungsbügel 42 der gegenüberliegenden Platte 3, 5 ein.

Grundsätzlich sei wie in den Fig. dargestellt festgehalten, daß die Nut 17 zumindest in Teilbereichen in einer über eine der Platten 2 bis 5 vorragenden Randleiste 16 angeordnet ist und eine offene Länge 25 aufweist, die zumindest der Länge 26 des Schwenkzapfens 11 entspricht und im Bereich einer der Seitenwangen 22 der Nut 17 ein einen Schwenkbereich des Verbindungssteges 12 um eine Längsmittelachse 24 der Nut 17 freigebende in radialer Richtung verlaufende Ausnehmung 21 angeordnet ist, die in Richtung der Längsmittelachse 24 der Nut 17 durch den Halteansatz 19 und einen Anschlag 27 begrenzt ist und ein Abstand 125 zwischen dem Halteansatz 19 und dem Anschlag 27 zumindest gleich einer parallel zum Schwenkzapfen 11 verlaufenden Länge 126 des Verbindungssteges 12 aber nicht größer ist als die Summe aus der Länge 126 des Verbindungssteges 12 und einer Zapfenlänge 81 des über diesen in gleicher Richtung vorragenden Endbereiches 18 des Schwenkzapfens 11.

Weiters ist zwischen zumindest zwei im Bereich einer Stirnkante 13 einer Platte 2 bis 5 angeordneten Schwenkzapfen 11 ein zumindest in einer aufgerichteten Stellung der Platte 2 bis 5 wirksamer Schwenkbegrenzer 53 angeordnet, der in einem in Schwenkrichtung zum Aufstellen der Platte 2 bis 5 voreilenden Winkelabstand einen Hüllkreis überragt, der coaxial zu einer Achse 59 des Schwenkzapfens 11 verläuft und einen Radius aufweist, der einem Maß 87 um welches die Achse 59 von der dieser zugewandten Stirnkante 13 der anderen Platte 2 bis 5 entspricht.

Zur Verbindung der Platten 2 bis 5 untereinander ist die Verbindungsvorrichtung 70 durch ein in einer Platte 3, 5 feststehend angeordnetes Verbindungselement 69 gebildet, welches in Richtung der weiteren Platte 2, 4 vorragt und diesem auf der weiteren Platte 2, 4 eine Verbindungsaufnahme 137 mit elastisch verformbaren Rückhalteelementen 139 in kongruenter Anordnung zugeordnet ist.

Weiters sind die Stütz- bzw. Zentrierelemente 66 bis 68, 151 und 98 bis 102 in der Ebene einer Platte 2 bis 5 in mehreren unterschiedlich zueinander verlaufenden Raumrichtungen angeordnet.

Der Ordnung halber sei abschließend darauf hingewiesen, daß zum besseren Verständnis des Aufbaus des Behälters diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4, 5; 6, 7; 8, 9; 10, 11; 12, 13; 14, 15, 16, 17, 18; 19, 20; 21, 22; 23, 24; 25, 26 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Behälter
- 2: Platte
- 3: Platte
- 4: Platte
- 5: Platte

- 6: Platte
- 7: Durchbruch
- 8: Innenraum
- 9: Ausschnitt
- 10: Schwenkvorrichtung

- 11: Schwenkzapfen
- 12: Verbindungssteg
- 13: Stirnkante
- 14: Lagergehäuse
- 15: Oberfläche

- 16: Randleiste
- 17: Nut
- 18: Endbereich
- 19: Halteansatz
- 20: Verkleidungselement

- 21: Ausnehmung
- 22: Seitenwange
- 23: Basisplatte
- 24: Längsmittelachse
- 25: Länge

- 26: Länge
- 27: Anschlag
- 28: Innenfläche
- 29: Anschlagleiste
- 30: Stirnkante

- 31: Stirnkante
- 32: Stirnkante
- 33: Stirnkante
- 34: Dicke
- 35: Länge

- 36: Innenweite
- 37: Innenweite
- 38: Distanz
- 39: Stirnkante
- 40: Höhe

- 41: Dicke
- 42: Verstärkungsbügel
- 43: Schmalstirnseite
- 44: Schmalstirnseite
- 45: Längsstirnseitenkante

- 46: Höhe
- 47: Längsträger
- 48: Längsträger
- 49: Vertikalträger
- 50: Diagonalstützen

- 51: Zentrierausnehmung
- 52: Zentriervorsprung
- 53: Schwenkbegrenzer
- 54: Aufstandsfläche
- 55: Stützfläche

- 56: Seitenkante
- 57: Hüllfläche
- 58: Abstand
- 59: Achse
- 60: Endbereich

- 61: Ausmaß
- 62: Höhe
- 63: Randleiste
- 64: Außenfläche
- 65: Dicke

- 66: Stütz- bzw. Zentrierelement
- 67: Stütz- bzw. Zentrierelement
- 68: Stütz- bzw. Zentrierelement
- 69: Verbindungselement
- 70: Verbindungsvorrichtung

- 71: Schwenkzapfenpaar
- 72: Schwenkzapfenpaar
- 73: Distanz
- 74: Schwenkzapfenpaar
- 75: Schwenkzapfenpaar

- 76: Distanz
- 77: Länge
- 78: Führungsfläche
- 79: Ausnehmung
- 80: Länge

- 81: Zapfenlänge
- 82: Höhe
- 83: Breite
- 84: Distanz
- 85: Distanz

- 86: Innenseitenwand
- 87: Maß
- 88: Distanz
- 89: Dicke
- 90: Breite

- 91: Schmalstirnseite
- 92: Schmalstirnseite
- 93: Schwenkzapfenpaar
- 94: Schwenkzapfenpaar
- 95: Distanz

- 96: Distanz
- 97: Dicke
- 98: Stütz- bzw. Zentrierelement
- 99: Stütz- bzw. Zentrierelement
- 100: Stütz- bzw. Zentrierelement

- 101: Stütz- bzw. Zentrierelement
- 102: Stütz- bzw. Zentrierelement
- 103: Dicke
- 104: Dicke
- 105: Gesamtdicke

- 106: Dicke
- 107: Durchmesser
- 108: Dicke
- 109: Durchmesser
- 110: Gesamtdicke

- 111: Unterseite
- 112: Steg
- 113: Außenmaß
- 114: Außenmaß
- 115: Innenweite

- 116: Innenweite
- 117: Höhe
- 118: Maß
- 119: Höhe
- 120: Nutengrund

- 121: Endbereich
- 122: Endbereich
- 123: Durchmesser
- 124: Aufnahmekammer
- 125: Abstand

- 126: Länge
- 127: Stirnkante
- 128: Stirnkante
- 129: Stirnfläche
- 130: Stirnfläche

- 131: Bogenlänge
- 132: Schrägfläche
- 133: Öffnungsweite
- 134: Ausnehmung
- 135: Höhe

- 136: Betrag
- 137: Verbindungsaufnahme
- 138: Überdeckungsbereich
- 139: Rückhalteelement
- 140: Fortsatz

- 141: Vorsprung
- 142: Führungsfläche
- 143: Aufnahme
- 144: Öffnungsweite
- 145: Weite

- 146: Öffnungsbreite
- 147: Ausnehmung
- 148: Stützaufnahme
- 149: Stützaufnahme
- 150: Stützaufnahme

- 151: Stütz- bzw. Zentrierelement
- 152: Übergangsbereich
- 153: Abstand
- 154: Dicke
- 155: Einformung

- 156: Teilbereich
- 157: Außenseite
- 158: Außenseite
- 159: Höhe
- 160: Höhe

- 161: Überlappungsbereich
- 162: Einformung
- 163: Vorsprung
- 164: Ausnehmung
- 165: Wandstärke

- 166: Verstärkungsleiste
- 167: Verstärkungsrippe
- 168: Durchbruch
- 169: Dicke
- 170: Außenseitenfläche

## Patentansprüche

1. Behälter aus mehreren Platten (2 bis 6), wovon mehrere der Platten (2 bis 4) im Bereich deren Stirnkanten (13) über Schwenkvorrichtungen (10) mit der als Boden ausgebildeten Platte (6) verstellbar verbunden sind und zumindest ein parallel zu einer Stirnkante (13) einer Platte (2 bis 5) verlaufender Schwenkzapfen (11) über einen Verbindungssteg (12) distanziert von dieser gehaltert und in eine von bevorzugt mehreren Nuten (17) einer anderen Platte (6) einsetzbar ist und Halteansätze (19) angeordnet sind und ein Halteansatz (19) zur Bildung einer Aufnahmekammer (124) für einen der beiden Endbereiche (18, 60; 121, 122) des Schwenkzapfens (11) durch ein einen Teil der Nut (17) in deren Endbereich (18, 60; 121, 122) über deren Breite abdeckendes Verkleidungselement (20) gebildet ist und die Nut (17) eine offene Länge (25) aufweist, die zumindest der Länge (26) des Schwenkzapfens (11) entspricht und die Nut (17) zumindest in Teilbereichen in einer über eine der Platten (2 bis 5) vorragenden Randleiste (16) angeordnet ist und im Bereich einer der Seitenwangen (22) der Nut (17) ein einen Schwenkbereich des Verbindungssteges (12) um eine Längsmittelachse (24) der Nut (17) freigebende in radialer Richtung verlaufende Ausnehmung (21) angeordnet ist, die in Richtung der Längsmittelachse (24) der Nut (17) durch einen weiteren Halteansatz (19) und einen Anschlag (27) begrenzt ist und ein Abstand (125) zwischen dem Halteansatz (19) und dem Anschlag (27) zumindest gleich einer parallel zum Schwenkzapfen (11) verlaufenden Länge (126) des Verbindungssteges (12) aber nicht größer ist als die Summe aus der Länge (126) des Verbindungssteges (12) und einer Zapfenlänge (81) des über diesen in gleicher Richtung vorragenden Endbereiches (18) des Schwenkzapfens (11) **dadurch gekennzeichnet, dass** die Nut (17) in den vorragenden Randleisten (16) in Richtung der gegenüberliegenden, als Seitenwände ausgebildeten Platten (2 bis 5) durch die offenen Längen (25) hin zum Inneren des Behälters geöffnet ausgebildet ist.

2. Behälter nach Anspruch 1, **dadurch gekennzeichnet, daß** zwischen zumindest zwei im Bereich einer Stirnkante (13) einer Platte (2 bis 5) angeordnete Schwenkzapfen (11) ein zumindest in einer aufgerichteten Stellung der Platte (2 bis 5) wirksamer Schwenkbegrenzer (53) angeordnet ist, der in einem in Schwenkrichtung zum Aufstellen der Platte (2 bis 5) voreilenden Winkelabstand einen Hüllkreis überragt, der coaxial zu einer Achse (59) des Schwenkzapfens (11) verläuft und einen Radius aufweist, der einem Maß (87), um welches die Achse (59) von der dieser zugewandten Stirnkante (13) der anderen Platte (2 bis 5) distanziert ist, entspricht.

3. Behälter nach Anspruch 1 oder 2, **dadurch gekennzeichnet, daß** dieser insbesondere aus Kunststoff gebildet ist und einen Boden und zumindest zwei mit der als Boden ausgebildeten Platte (6) über Schwenkvorrichtungen (10) verstellbar verbundenen Platten (2 bis 5) umfaßt und daß in einem Überdeckungsbereich (138) zwischen Schmalstirnseiten (43, 44; 91, 92) der Platten (2 bis 5) eine Verbindungsvorrichtung (70) zum lösbaren Verbinden der Platten (3, 5; 2, 4), die in einer in etwa zum Boden senkrecht verlaufenden Stellung der Platten (3, 5; 2, 4) einem selbsttätigen Lösen der Verbindungsvorrichtung (70) entgegenwirkt, angeordnet ist, wobei die Verbindungsvorrichtung (70) durch ein in einer Platte (3, 5) feststehend angeordnetes Verbindungselement (69) gebildet ist, welches in Richtung der weiteren Platte (2, 4) vorragt und diesem auf der weiteren Platte (2, 4) eine Verbindungsaufnahme (137) mit elastisch verformbaren Rückhalteelementen (139) in kongruenter Anordnung zugeordnet ist.

4. Behälter nach einem der Ansprüche 1 bis 3, **dadurch gekennzeichnet, daß** dieser insbesondere aus Kunststoff gebildet ist und einen Boden mit zumindest zwei mit dem Boden über Schwenkvorrichtungen (10) verstellbar verbundenen Seitenwände umfaßt und daß in einem Überdeckungsbereich (138) zwischen einer Stirnfläche, einer Seitenwand und einer Innenfläche der weiteren Seitenwand durch Vorsprünge und Ausnehmungen gebildete Stütz- bzw. Zentrierelemente (66 bis 68, 151, 98 bis 102) angeordnet sind, die bei aufgerichteter Stellung der Seitenwände ineinandergreifend aneinander formschlüssig lösbar befestigt sind und jeweils mehrere Vorsprünge und Ausnehmungen in einer senkrechten Reihe der benachbarten Ränder der Seitenwände nebeneinanderliegen, und daß die Stütz- bzw. Zentrierelemente (66 bis 68, 151 und 98 bis 102) in der Ebene einer Platte (2 bis 5) in mehreren unterschiedlich zueinander verlaufenden Raumrichtungen angeordnet sind.

5. Behälter nach Anspruch 1, **dadurch gekennzeichnet, daß** ein Maß (87) zwischen der Stirnkante (13) der Platten (2 bis 5), die der als Boden ausgebildeten Platte (6) zugewandt ist und einem diesem zugewandten, nächstliegenden Oberflächenteil des Endbereiches (18) des Schwenkzapfens (11) geringfügig größer ist als eine Dicke (89) des Verkleidungselementes (20).

6. Behälter nach Anspruch 1 oder 5, **dadurch gekennzeichnet, daß** die Distanz (88) an einem an dem Verkleidungselement (20) anliegenden Endbereich (18) einer Dicke (89) des Verkleidungselementes (20) entspricht.

7. Behälter nach einem oder mehreren der Ansprüche 1, 5 und 6, **dadurch gekennzeichnet, daß** die Differenz zwischen der Dicke (89) und dem Maß (87) gleich groß ist wie ein Abstand (58) zwischen der Aufstandsfläche (54) des Schwenkbegrenzers (53) und der Stützfläche (55) der Platten (2 bis 5) bzw. der Platte (6).

8. Behälter nach einem oder mehreren der Ansprüche 1 und 5 bis 7, **dadurch gekennzeichnet, daß** eine Differenz zwischen der Dicke (89) und dem Maß (87) kleiner ist wie der Abstand (58) zwischen der Aufstandsfläche (54) und der Stützfläche (55) der Platten (2 bis 5) bzw. der Platte (6).

9. Behälter nach einem oder mehreren der Ansprüche 1 und 5 bis 8, **dadurch gekennzeichnet, daß** der Schwenkzapfen (11) durch den Verbindungssteg (12) und darüber hinaus durch entlang der Längsmittelachse (24) vorragende Endbereiche (18, 60) gebildet ist.

10. Behälter nach einem oder mehreren der Ansprüche 1 und 5 bis 9, **dadurch gekennzeichnet, daß** der Endbereich (18) des Schwenkzapfens (11) eine stirnseitig umlaufende, konische Führungsfläche (78) aufweist.

11. Behälter nach einem oder mehreren der Ansprüche 1 und 5 bis 10, **dadurch gekennzeichnet, daß** die Nut (17) einen konkav ausgebildeten Nutengrund (120) aufweist.

12. Behälter nach einem oder mehreren der Ansprüche 1 und 5 bis 11, **dadurch gekennzeichnet, daß** die Nut (17) zwei Endbereiche (121, 122) aufweist und einer der Endbereiche (121, 122) über einen Durchmesser (123) der Nut (17) verlaufend durch den Halteansatz (19) bzw. das Verkleidungselement (20) geschlossen ist.

13. Behälter nach einem oder mehreren der Ansprüche 1 und 5 bis 12, **dadurch gekennzeichnet, daß** der Halteansatz (19) mit dem Verkleidungselement (20) eine Aufnahmekammer (124) für den Endbereich (18) des Schwenkzapfens (11) bildet.

14. Behälter nach einem oder mehreren der Ansprüche 1 und 5 bis 13, **dadurch gekennzeichnet, daß** ein Durchmesser (123) der Nut (17) gleich groß bzw. geringfügig größer einem Durchmesser (107) des Schwenkzapfens (11) ausgebildet ist.

15. Behälter nach einem oder mehreren der Ansprüche 1 und 5 bis 14, **dadurch gekennzeichnet, daß** die Nut (17) in Teilbereichen der Randleiste (16) in den Lagegehäusen (14) angeordnet ist.

16. Behälter nach einem oder mehreren der Ansprüche 1 und 5 bis 15, **dadurch gekennzeichnet, daß** eine offene Länge (25) der Nut zumindest gleich einer Länge (26) bzw. geringfügig größer der Länge (26) des Schwenkzapfens (11) ausgebildet ist.

17. Behälter nach einem oder mehreren der Ansprüche 1 und 5 bis 16, **dadurch gekennzeichnet, daß** ein Abstand (125) zwischen dem Halteansatz (19) und dem Anschlag (27) zumindest gleich bzw. größer einer in Richtung der Längsmittelachse (24) gemessenen Länge (126) des Verbindungssteges (12) ausgebildet ist.

18. Behälter nach einem oder mehreren der Ansprüche 1 und 5 bis 17, **dadurch gekennzeichnet, daß** zwischen einer dem Anschlag (27) zugewandten Stirnfläche (130) des Halteansatzes (19) und dem Anschlag (27) der Seitenwange (22) der Nut (17) eine radial umlaufende Ausnehmung (21) angeordnet ist, welche eine Bogenlänge (131) aufweist.

19. Behälter nach einem odermehreren der Ansprüche 1 und 5 bis 18, **dadurch gekennzeichnet, daß** die Ausnehmung (121) zur Freigabe eines Schwenkbereiches für den Verbindungssteg (12) im Ausmaß der Bogenlänge (131) ausgebildet ist.

20. Behälter nach einem oder mehreren der Ansprüche 1 und 5 bis 19, **dadurch gekennzeichnet, daß** ein dem offenen Ende der Nut (17) zugewandter Endbereich der Seitenwange (22) eine in Richtung der Längsmittelachse (24) verlaufende Schrägfläche (132) aufweist.

21. Behälter nach einem oder mehreren der Ansprüche 1 und 5 bis 20, **dadurch gekennzeichnet, daß** eine Öffnungsweite der Nut (17) gleich groß dem Durchmesser (107) des Schwenkzapfens (11) ausgebildet ist.

22. Behälter nach einem oder mehreren der Ansprüche 1 und 5 bis 21, **dadurch gekennzeichnet, daß** die Öffnungsweite (133) der Nut (17) geringfügig kleiner dem Durchmesser (107) des Schwenkzapfens (11) ausgebildet ist.

23. Behälter nach einem oder mehreren der Ansprüche 1 und 5 bis 22, **dadurch gekennzeichnet, daß** der Nutengrund (120) eine Ausnehmung (134) aufweist, welche an den Hüllkreis des Schwenkzapfens (11) angepaßt ist.

24. Behälter nach Anspruch 2, **dadurch gekennzeichnet, daß** eine Seitenkante (156) der in etwa rechteckförmigen Aufstandsfläche (54) der Platten (2 bis 5) über den diese tangierenden Hüllkreis mit einer durch die Längsmittelachse (24) des Schwenkzapfens (11) gebildeten Hüllfläche (57) überragt.

25. Behälter nach den Ansprüchen 2 oder 24, **dadurch gekennzeichnet, daß** die Aufstandsflächen (54) der Schwenkbegrenzer (53) in einem geringfügigen Abstand (58) oberhalb der diesen zugeordneten Stützflächen (55) der den Boden bildenden Platte angeordnet sind.

26. Behälter nach den Ansprüchen 2, 24 und 25, **dadurch gekennzeichnet, daß** die Aufstandsfläche (54) der Schwenkbegrenzer (53) bei in zur Platte (6) rechtwinkeliger Stellung der Platten (2, 5) zur Stützfläche (55) parallel und von dieser geringfügig der Höhe (46) der Platten (2 bis 5) nach distanziert ist.

27. Behälter nach einem oder mehreren der Ansprüche 2 und 24 bis 26, **dadurch gekennzeichnet, daß** die über die Verbindungsstege (12) im Abstand von der Stirnkante (13) gehalterten Schwenkzapfen (11) paarweise angeordnet sind.

28. Behälter nach einem oder mehreren der Ansprüche 2 und 24 bis 27, **dadurch gekennzeichnet, daß** die einer Längsmitte der Platten (3, 5) nächstliegenden Schwenkzapfenpaare (71, 72) eine geringere Distanz (73) zwischen den einzelnen Schwenkzapfen (11) aufweisen als die im Bereich der Schmalstimseiten (43, 44) angeordneten Schwenkzapfenpaare (74, 75), bei welchen die Schwenkzapfen (11) in einer Distanz (76) voneinander angeordnet sind.

29. Behälter nach einem oder mehreren der Ansprüche 2 und 24 bis 28, **dadurch gekennzeichnet, daß** zwischen den Schwenkzapfenpaaren (71, 72 und 74, 75) jeweils Schwenkbegrenzer (53) angeordnet sind.

30. Behälter nach einem oder mehreren der Ansprüche 2 und 24 bis 29, **dadurch gekennzeichnet, daß** eine Länge (77) der Schwenkbegrenzer (53) in Richtung der Schmalstirnseiten (43, 44) zwischen den Schwenkzapfenpaaren (71, 72) geringer als zwischen den Schwenkzapfenpaaren (71, 74 bzw. 72, 75) ist.

31. Behälter nach einem oder mehreren der Ansprüche 2 und 24 bis 30, **dadurch gekennzeichnet, daß** die Länge (77) der Schwenkbegrenzer (53) geringer ist als eine Länge (80) einer Ausnehmung (79) im Lagergehäuse (14).

32. Behälter nach einem oder mehreren der Ansprüche 2 und 24 bis 31, **dadurch gekennzeichnet, daß** die Differenz zwischen der Länge (77) und der Länge (80) einer über den Verbindungssteg (12) vorragenden Zapfenlänge (81) des Endbereiches (18) entspricht.

33. Behälter nach einem oder mehreren der Ansprüche 2 und 24 bis 32, **dadurch gekennzeichnet, daß** eine Höhe (82) der Schwenkbegrenzer (53) gleich groß einer Breite (83) des Lagergehäuses (14) ist.

34. Behälter nach einem oder mehreren der Ansprüche 2 und 24 bis 33, **dadurch gekennzeichnet, daß** eine Distanz (84) zwischen der Längsmittelachse (24) der Schwenkzapfen (11) und der Aufstandsfläche (54) des Schwenkbegrenzers (53) nicht größer ist als eine Distanz (85) zwischen der Längsmittelachse (24) der Nut (17) und einer Innenseitenwand (86) des Lagergehäuses (14), die der Platte (6) bzw. dem Mittelbereich der Platte (6) zugewandt ist.

35. Behälter nach Anspruch 3, **dadurch gekennzeichnet, daß** das Verbindungselement (69) durch einen pilzkopfartigen Fortsatz (140) gebildet ist.

36. Behälter nach Anspruch 3 oder 35, **dadurch gekennzeichnet, daß** die elastisch verformbaren Rückhalteelemente (139) Vorsprünge zum Hintergreifen der pilzkopfartigen Fortsätze (140) aufweisen.

37. Behälter nach einem oder mehreren der Ansprüche 3 und 35 und 36, **dadurch gekennzeichnet, daß** die Verbindungsaufnahmen (137) kreisförmig oder quadratisch bzw. mehreckig ausgebildet sind.

38. Behälter nach einem oder mehreren der Ansprüche 3 und 35 bis 37, **dadurch gekennzeichnet, daß** die Verbindungsaufnahmen (137) langiochförmig ausgebildet sind.

39. Behälter nach einem oder mehreren der Ansprüche 3 und 35 bis 38, **dadurch gekennzeichnet, daß** die Verbindungsaufnahmen (137) winkelig in einem Randbereich der Platten (2 bis 5) angeordnet sind.

40. Behälter nach einem oder mehreren der Ansprüche 3 und 35 bis 39, **dadurch gekennzeichnet, daß** eine stirnseitige Weite (145) des Fortsatzes (40) geringer einer dieser Stirnseite des Fortsatzes (40) zugewandten Öffnungsbreite (146) der Rückhalteelemente (139) ist.

41. Behälter nach einem oder mehreren der Ansprüche 3 und 35 bis 40, **dadurch gekennzeichnet, daß** entlang der Rückhalteelemente (139) zur Erzielung der federnden Ausbildung derselben eine beliebige Anzahl von Ausnehmungen (147) angeordnet sind.

42. Behälter nach Anspruch 4, **dadurch gekennzeichnet, daß** die Stütz- bzw. Zentrierelemente (66 bis 68, 151, 98 bis 102) S-förmig und/oder L-förmig ausgebildet sind.

43. Behälter nach den Ansprüchen 4 oder 42, **dadurch gekennzeichnet, daß** die Platten (2, 4) im Bereich ihrer Schmalstimseiten (91, 92) sich von der Randleiste (63) in Richtung des Verstärkungsbügels (42) erstreckende und über eine Dicke (97), die die Platten (2, 4) im Bereich zwischen dem Verstärkungsbügel (42) und der Schwenkvorrichtung (11) aufweisen, vorragende Stütz- bzw. Zentrierelemente (108 bis 112) aufweisen.

44. Behälter nach den Ansprüchen 4, 42 und 43, **dadurch gekennzeichnet, daß** die Stütz- bzw. Zentrierelemente (66 bis 68, 98 bis 102) in den ihnen zugeordneten Bereichen der Platten (2, 5 bzw. 3, 4) in mehreren unterschiedlich zueinander verlaufenden Raumrichtungen aneinanderliegend angeordnet sind

45. Behälter nach einem odermehreren der Ansprüche 4 und 42 bis 44, **dadurch gekennzeichnet, daß** in der Randleiste (63) der Platten (2, 4) Einformungen (155) angeordnet sind, welche zur Aufnahme von Teilbereichen (156) der Stütz- bzw. Zentrierelemente (66, 67, 151) ausgebildet sind.

46. Behälter nach einem odermehreren der Ansprüche 4 und 42 bis 45, **dadurch gekennzeichnet, daß** eine Tiefe dieser Einformungen (155) einersenkrecht zur Anschlagleiste (29) gemessenen Höhe der Teilbereiche (156) der Stütz- bzw. Zentrierelemente (66, 67, 151) entspricht.

47. Behälter nach einem oder mehreren der Ansprüche 4 und 42 bis 46, **dadurch gekennzeichnet, daß** Außenseiten (157) der Stütz- bzw. Zentrierelemente (98 bis 100) formschlüssig an Außenseiten (158) der Stütz- bzw. Zentrierelemente (66 bis 68) derAnschlagleiste (29) anliegen.

48. Behälter nach einem oder mehreren der Ansprüche 4 und 42 bis 47, **dadurch gekennzeichnet, daß** eine Höhe (159) der Stütz- bzw. Zentrierelemente (98 bis 100) gleich einer Höhe (160) der Stütz- bzw. Zentrierelemente (66 bis 68) ist.

49. Behälter nach einem oder mehreren der Ansprüche 4 und 42 bis 48, **dadurch gekennzeichnet, daß** die Außenseiten (157, 158) miteinander korrespondierende Schrägflächen ausbilden.

50. Behälter nach einem oder mehreren der Ansprüche 4 und 42 bis 49, **dadurch gekennzeichnet, daß** die Stütz- bzw. Zentrierelemente (98 bis 102) der Platte (2) in Richtung der Anschlagleiste (29) der Platte (5) verjüngend verlaufen.

51. Behälter nach einem odermehreren der Ansprüche 4 und 42 bis 50, **dadurch gekennzeichnet, daß** die Stütz- bzw. Zentrierelemente (66 bis 68, 151) der Anschlagleiste (29) der Platte (5) in Richtung der Platte (2) verjüngend verlaufen.

52. Behälter nach einem oder mehreren der vorhergehenden Ansprüche, **dadurch gekennzeichnet, daß** eine Länge (35) der die Stirnseitenwände bildenden Platten (2, 4) gleich oder geringfügig kleiner einer Innenweite (36) zwischen den einander zugewandten Seitenflächen der Lagergehäuse (14) zur Aufnahme der Schwenkzapfen (11) der die Längsseitenwände bildenden Platten (3, 5) ist.

53. Behälter nach einem oder mehreren der vorhergehenden Ansprüche, **dadurch gekennzeichnet, daß** eine Innenweite (37) zwischen den Anschlagleisten (29) jeder der die Längsseitenwände bildenden Platten (3, 5) gleich oder geringfügig größer einer maximalen Distanz (38) zwischen den voneinander abgewendeten Stirnseitenflächen der Lagergehäuse (14) ist.

54. Behälter nach einem oder mehreren der vorhergehenden Ansprüche, **dadurch gekennzeichnet, daß** die die Seitenwände bildenden Platten (2 bis 5) stabförmige Längsträger (47, 48), Vertikalträger (49) sowie Diagonalstützelemente (50) aufweisen.

55. Behälter nach einem oder mehreren der vorhergehenden Ansprüche, **dadurch gekennzeichnet, daß** im Bereich der Längsseitenkante (45) Zentrierausnehmungen (51) zur Aufnahme von entsprechenden Zentriervorsprüngen in der den Boden bildenden Platte (6) angeordnet sind.

56. Behälter nach einem oder mehreren der vorhergehenden Ansprüche, **dadurch gekennzeichnet, daß** eine in der Ebene der Innenfläche (28) verlaufende Achse (59) des Schwenkzapfens (11) in einem größeren Abstand von der Innenfläche (28) angeordnet ist als die Hälfte der Dicke (34) der einzelnen Platten (2 bis 5).

57. Behälter nach einem oder mehreren der vorhergehenden Ansprüche, **dadurch gekennzeichnet, daß** die Randleiste (63) im Bereich der den Schwenkzapfen (11) gegenüberliegenden Längsstirnseitenkante (45) den Verstärkungsbügel (42) bildet und als Hohlprofil ausgebildet ist.

58. Behälter nach einem oder mehreren der vorhergehenden Ansprüche, **dadurch gekennzeichnet, daß** eine Gesamtdicke (105) des Bodens der Randleiste (16) mit den Lagergehäusen (14) im stirnseitigen Bereich der Platte (6) einer Summe der Dicke (106) der Platte (6) zuzüglich einer Dicke (107) des Schwenkzapfens (11) und einer Dicke (108) des Verkleidungselementes (20) entspricht.

59. Behälter nach einem oder mehreren der vorhergehenden Ansprüche, **dadurch gekennzeichnet, daß** eine Gesamtdicke (110) der Randleisten (16) mit den Lagergehäusen (14) für die Platten (3, 5) vorzugsweise um die Dicke (34) der Platten (2, 4) höher ist als eine Gesamtdicke (105) der Randleisten (16) mit den Lagergehäusen (14) im Bereich der Platten (2, 4).

60. Behälter nach einem oder mehreren der vorhergehenden Ansprüche, **dadurch gekennzeichnet, daß** die als Boden ausgebildete Platte (6) über eine Unterseite (111) vorragende Stege (112) aufweist.

61. Behälter nach einem oder mehreren der vorhergehenden Ansprüche, **dadurch gekennzeichnet, daß** ein Ausmaß (113) der Stege (112) in der Seitenansicht der Platte (6) und ein Ausmaß (114) der Stege (112) in der Stirnansicht der Platte (6) in etwa einer Innenweite (115) zwischen den Platten (2, 4) in ihrer aufgerichteten Stellung sowie einer Innenweite (116) zwischen den aufgerichteten Platten (3, 5) entspricht.

62. Behälter nach einem oder mehreren der vorhergehenden Ansprüche, **dadurch gekennzeichnet, daß** die Randleiste (16) für die Platten (3, 5) um ein Maß (118) gegenüber den Stirnkanten (39) der Randleisten (16) für die Platten (2, 4) vorragt.

63. Behälter nach einem oder mehreren der vorhergehenden Ansprüche, **dadurch gekennzeichnet, daß** das Maß (118) in etwa einer Dicke (104) der Anschlagleisten (29) der Platten (3, 5) entspricht.

64. Behälter nach einem oder mehreren der vorhergehenden Ansprüche, **dadurch gekennzeichnet, daß** eine Höhe (46) der die Seitenwände bildenden Platten (3, 5) größer ist als die halbe Breite der den Boden bildenden Platte (6).

65. Behälter nach einem oder mehreren der vorhergehenden Ansprüche, **dadurch gekennzeichnet, daß** die die Seitenwände bildenden Platten (3, 5) in ihrer auf der den Boden bildenden Platte (6) aufliegenden Transportstellung einander überlappen und eine Dicke (169) der übereinanderliegenden Platten (3, 5) nicht größer ist als die Dicke (34) einer einzelnen der Platten (2 bis 5).

66. Behälter nach einem oder mehreren der vorhergehenden Ansprüche, **dadurch gekennzeichnet, daß** eine Außenseitenfläche des Verstärkungsbügels (42) in einer gegenläufig verlaufenden Nut im Verstärkungsbügel (42) der gegenüberliegenden Platte (3, 5) eingreift.

67. Behälter nach einem oder mehreren der vorhergehenden Ansprüche, **dadurch gekennzeichnet, daß** die Platten (3, 5) einen Überlappungsbereich (161) ausbilden.

68. Behälter nach einem oder mehreren der vorhergehenden Ansprüche, **dadurch gekennzeichnet, daß** im Überlappungsbereich (161) der Platten (3, 5) Verstärkungsrippen (167) angeordnet sind.

## Claims

1. Container consisting of a plurality of plates (2 to 6), some of which plates (2 to 4) are joined at their terminal edges (13) to a plate (6) forming the base so as to be displaceable by means of hinge mechanisms (10), and at least one hinge pin (11) extending parallel with a terminal edge (13) of a plate (2 to 5) is retained by means of a connecting web (12) spaced apart therefrom and can be inserted in one of preferably several grooves (17) of another plate (6), and retaining shoulders (19) are provided, and a retaining shoulder (19) designed to form a housing compartment (124) for one of the two end regions (18, 60; 121, 122) of the hinge pin (11) is formed by a cladding element (20) spanning a part of the end region (18, 60; 121, 122) of the groove (17), and the groove (17) is disposed in at least certain regions of a peripheral strip (16) projecting out from one of the plates (2 to 5) and has an open length (25) corresponding to at least the length (26) of the hinge pin (11), and a recess (21) extending in the radial direction is disposed in the region of one of the side faces (22) of the groove (17) leaving a pivot region of the connecting web (12) free about a longitudinal mid-axis (24) of the groove (17), which is bounded by another retaining shoulder (19) and a stop (27) in the direction of the longitudinal mid-axis (24) of the groove (17), and a distance (125) between the retaining shoulder (19) and the stop (27) is equal to at least a length (126) of the connecting web (12) extending parallel with the hinge pin (11) but is no longer than the sum of the length (126) of the connecting web (12) and a pin length (81) of the end region (18) of the hinge pin (11) projecting beyond the latter in the same direction, **characterised in that** the groove (17) in the projecting peripheral strips (16) is open towards the interior of the container in the direction of the oppositely lying plates (2 to 5) forming side walls as a result of the open lengths (25).

2. Container as claimed in claim 1, **characterised in that**, an active pivot restriction (53) is disposed between at least two hinge pins (11) in the region of a terminal edge (13) of a plate (2 to 5) when the plates (2 to 5) are in an erected upright position, which projects above an external curvature within an advance angular distance in the pivot direction for erecting the plate (2 to 5), extending coaxially with an axis (59) of the hinge pin (11), and has a radius corresponding to an amount (87) by which the axis (59) is spaced apart from the terminal edge (13) of the other plate (2 to 5) facing it.

3. Container as claimed in claim 1 or 2, **characterised in that** it is made in particular from plastic and has at least two plates (2 to 5), which are joined to the plate (6) forming the base so as to be displaceable by means of hinge mechanisms (10), and a connecting mechanism (70) for releasably connecting the plates (3, 5; 2, 4) is provided in an overlap region (138) between two narrow end faces (43, 44; 91, 92) of the plates (2 to 5), and the connecting mechanism (70) is prevented from being released of its own volition when the plates (3, 5; 2, 4) are in a position extending substantially perpendicular to the base, the connecting mechanism (70) being provided in the form of a stationary connecting element (69) disposed in one plate (3, 5) which projects out towards the other plate (2, 4) and co-operates with a connecting mount (137) with congruently disposed elastically deformable retaining elements (139) on the other plates (2, 4).

4. Container as claimed in one of claims 1 to 3, **characterised in that** it is made in particular from plastic and has at least two side walls joined to a base so as to be displaceable by means of at least two hinge mechanisms (10), and supporting and centring elements (66 to 68, 151, 98 to 102) are provided in an overlap region (138) between a terminal face, a side wall and an internal face of the other side wall in the form of projections and recesses, which releasably engage in one another in a friction lock when the side walls are in an erected upright position, and a plurality of respective projections and recesses sit adjacent to one another in a row perpendicular to the adjacent edges of the side walls and the supporting and centring elements (66 to 68, 151 and 98 to 102) are arranged in several different spatial directions extending in a plane of a plate (2 to 5).

5. Container as claimed in claim 1, **characterised in that** a dimension (87) between the terminal edge (13) of the plates (2 to 5) directed towards the plate (6) constituting the base and an immediately adjacent surface part of the end region (18) of the hinge pin (11) directed towards it is slightly bigger than a thickness (89) of the cladding element (20).

6. Container as claimed in claim 1 or 5, **characterised in that** the distance (88) to an end region (18) adjoining the cladding element (20) corresponds to a thickness (89) of the cladding element (20).

7. Container as claimed in one or more of claims 1, 5 and 6, **characterised in that** the difference between the thickness (89) and the dimension (87) is the same size as a distance (58) between the support surface (54) of the pivot restriction (53) and the support surface (55) of the plates (2 to 5) and the plate (6).

8. Container as claimed in one or more of claims 1 and 5 to 7, **characterised in that** a difference between the thickness (89) and the dimension (87) is smaller than the distance (58) between the support surface (54) and the support surface (55) of the plates (2 to 5) and the plate (6).

9. Container as claimed in one of claims 1 and 5 to 8, **characterised In that** the hinge pin (11) is formed by the connecting web (12) and additionally by end regions (18, 60) projecting out along the longitudinal mid-axis (24).

10. Container as claimed in one or more of claims 1 and 5 to 9, **characterised in that** the end region (18) of the hinge pin (11) has an end-face peripheral conical guide surface (78).

11. Container as claimed in one or more of claims 1 and 5 to 10, **characterised in that** the groove (17) has a concave groove base (120).

12. Container as claimed in one or more of claims 1 and 5 to 11, **characterised in that** the groove (17) has two end regions (121, 122) and one of the end regions (121, 122) is closed by the retaining shoulder (19) and the cladding element (20) across a diameter (123) of the groove (17).

13. Container as claimed in one or more of claims 1 and 5 to 12, **characterised in that** the retaining shoulder (19) in conjunction with the cladding element (20) forms a housing compartment (124) for the end region (18) of the hinge pin (11).

14. Container as claimed in one or more of claims 1 and 5 to 13, **characterised in that** a diameter (123) of the groove (17) is the same size as or slightly bigger than a diameter (107) of the hinge pin (11).

15. Container as claimed in one or more of claims 1 and 5 to 14, **characterised in that** the groove (17) is disposed in part regions of the peripheral strip (16) in the bearing housings (14).

16. Container as claimed in one or more of claims 1 and 5 to 15, **characterised in that** an open length (25) of the groove is at least equal to a length (26) or slightly bigger than the length (26) of the hinge pin (11).

17. Container as claimed in one of claims 1 and 5 to 16, **characterised in that** a distance (125) between the retaining shoulder (19) and the stop (27) is at least the same as or bigger than a length (126) of the connecting web (12) as measured in the direction of the longitudinal mid-axis (24).

18. Container as claimed in one or more of claims 1 and 5 to 17, **characterised in that**, between and end face (130) of the retaining shoulder (19) directed towards the stop (27) and the stop (27), the side face (22) of the groove (17) has a radially extending recess (21), which has an arc length (131).

19. Container as claimed in one or more of claims 1 and 5 to 18, **characterised in that** the recess (121) designed to leave a pivot region free for the connecting web (12) is disposed in the extension of the arc length (131).

20. Container as claimed in one or more of claims 1 and 5 to 19, **characterised in that** an end region of the side face (22) directed towards the open end of the groove (17) has an oblique surface (132) extending in the direction of the longitudinal mid-axis (24).

21. Container as claimed in one or more of claims 1 and 5 to 20, **characterised in that** an orifice width of the groove (17) is the same size as the diameter (107) of the hinge pin (11).

22. Container as claimed in one or more of claims 1 and 5 to 21, **characterised in that** the orifice width (133) of the groove (17) is slightly smaller than the diameter (107) of the hinge pin (11).

23. Container as claimed in one or more of claims 1 and 5 to 22, **characterised in that** the groove base (120) has a recess (134), which complements the external curvature of the hinge pin (11).

24. Container as claimed in claim 2, **characterised in that** a side edge (156) of the substantially rectangular support surface (54) of the plates (2 to 5) extending at a tangent to the external curvature projects beyond the latter by means of an external surface (57) formed by the longitudinal mid-axis (24) of the hinge pin (11).

25. Container as claimed in claims 2 or 24, **characterised in that** the support surfaces (54) of the pivot restriction (53) are disposed at a slight distance (58) above the support surfaces (55) of the plate forming the base and co-operating therewith.

26. Container as claimed in claims 2, 24 and 25, **characterised in that** the supportsurface (54) of the pivot restriction (53) is disposed parallel with the support surface (55) and spaced at a slight distance therefrom depending on the height (46) of the plates (2 to 5) when the plates (2, 5) are in a position perpendicular to the plate (6).

27. Container as claimed in one or more of claims 2 and 24 to 26, **characterised in that** the hinge pins (11) are arranged in pairs, retained at a distance from the terminal edge (13) by means of the connecting webs (12).

28. Container as claimed in one or more of claims 2 and 24 to 27, **characterised in that** the hinge pin pairs (71, 72) lying immediately adjacent to a lengthways centre of the plates (3, 5) are disposed so that a distance (73) between the individual hinge pins (11) is shorter than the hinge pin pairs (74, 75) disposed in the region of the narrow end faces (43, 44), the hinge pins (11) being disposed at a distance (76) from one another.

29. Container as claimed in one or more of claims 2 and 24 to 28, **characterised in that** a pivot restriction (53) is disposed between each of the hinge pin pairs (71, 72 and 74, 75).

30. Container as claimed in one or more of claims 2 and 24 to 29, **characterised in that** a length (77) of the pivot restriction (53) between the hinge pin pairs (71, 72) in the direction of the narrow end faces (43, 44) is shorter than between the hinge pin pairs (71, 74 and 72, 75).

31. Container as claimed in one or more of claims 2 and 24 to 30, **characterised in that** the length (77) of the pivot restriction (53) is shorter than a length (80) of a recess (79) in the bearing housing (14).

32. Container as claimed in one or more of claims 2 and 24 to 31, **characterised in that** the difference between the length (77) and the length (80) corresponds to a pin length (81) of the end region (18) extending beyond the connecting web (12).

33. Container as claimed in one or more of claims 2 and 24 to 32, **characterised in that** a height (82) of the pivot restriction (53) is the same size as a width (83) of the bearing housing (14).

34. Container as claimed in one or more of claims 2 and 24 to 33, **characterised in that** a distance (84) between the longitudinal mid-axis (24) of the hinge pins (11) and the support surface (54) of the pivot restriction (53) is no bigger than a distance (85) between the longitudinal mid-axis (24) of the groove (17) and an internal side wall (86) of the bearing housing (14) directed towards the plate (6) or centre region of the plate (6).

35. Container as claimed in claim 3, **characterised in that** the connecting element (69) is a projection (140) with a mushroom-shaped head.

36. Container as claimed in claim 3 or 35, **characterised in that** the elastically deformable retaining elements (139) have projections which engage round the mushroom-shaped projections (140).

37. Container as claimed in one or more of claims 3 and 35 and 36, **characterised in that** the connecting mounts (137) are circular or square or polygonal in shape.

38. Container as claimed in one or more of claims 3 and 35 to 37, **characterised in that** the connecting mounts (137) are oblong slots.

39. Container as claimed in one or more of claims 3 and 35 to 38, **characterised in that** the connecting mounts (137) are disposed at an angle in a peripheral region of the plates (2 to 5).

40. Container as claimed in one or more of claims 3 and 35 to 39, **characterised in that** an end-face width (145) of the projection (40) is shorter than an orifice width (146) of the retaining elements (139) directed towards this end face of the projection (40).

41. Container as claimed in one or more of claims 3 and 35 to 40, **characterised in that** any number of recesses (147) are provided along the retaining elements (139) in order to impart resilience thereto.

42. Container as claimed in claim 4, **characterised in that** the supporting and centring elements (66 to 68, 151, 98 to 102) are S-shaped and/or L-shaped.

43. Container as claimed in claims 4 or 42, **characterised in that** the plates (2, 4) have projecting supporting and centring elements (108 to 112) in the region of their narrow end faces (91, 92) extending from the peripheral strip (63) in the direction of the reinforcing brace (42) and across a thickness (97) incorporating the plates (2, 4) in the region between the reinforcing brace (42) and the hinge mechanism (11).

44. Container as claimed in claims 4, 42 and 43 **characterised in that** the supporting and centring elements (66 to 68, 98 to 102) are disposed adjacent to one another in the relevant regions of the plates (2, 5 and 3, 4) extending in several differential spatial directions.

45. Container as claimed in one or more of claims 4 and 42 to 44, **characterised in that** indentations (155) are provided in the peripheral strip (63) of the plates (2, 4), designed to accommodate part regions (156) of the supporting and centring elements (66, 67, 151).

46. Container as claimed in one of claims 4 and 42 to 45, **characterised in that** a depth of these indentations (155) corresponds to a height of the part regions (156) of the supporting and centring elements (66, 67, 151) as measured in the direction perpendicular to the stop strip (29).

47. Container as claimed in one or more of claims 4 and 42 to 46, **characterised in that** external faces (157) of the supporting and centring elements (98 to 100) sit in a friction lock against external faces (158) of the supporting and centring elements (66 to 68) of the stop strip (29).

48. Container as claimed in one or more of claims 4 and 42 to 47, **characterised in that** a height (159) of the supporting and centring elements (98 to 100) is the same as a height (160) of the supporting and centring elements (66 to 68).

49. Container as claimed in one or more of claims 4 and 42 to 48, **characterised in that** the external faces (157, 158) form mutually complementary inclined surfaces.

50. Container as claimed in one or more of claims 4 and 42 to 49, **characterised in that** the supporting and centring elements (98 to 102) of the plate (2) taper in the direction of the stop strip (29) of the plate (5).

51. Container as claimed in one or more of claims 4 and 42 to 50, **characterised in that** the supporting and centring elements (66 to 68, 151) of the stop strip (29) of the plate (5) taper in the direction of the plate (2).

52. Container as claimed in one or more of the preceding claims, **characterised in that** a length (35) of the plates (2, 4) forming the side end walls is the same as or slightly smaller than an internal width (36) between the mutually facing side faces of the bearing housing (14) for receiving the hinge pins (11) of the plates (3, 5) forming the longitudinal side walls.

53. Container as claimed in one or more of the preceding claims, **characterised in that** an internal width (37) between the stop strips (29) of each of the plates (3, 5) forming the longitudinal side walls is the same as or slightly shorter than a maximum distance (38) between mutually remote side end faces of the bearing housings (14).

54. Container as claimed in one or more of the preceding claims, **characterised in that** the plates (2 to 5) forming the side walls have bar-shaped longitudinal supports (47, 48), vertical supports (49) and diagonal support elements (50).

55. Container as claimed in one or more of the preceding claims, **characterised in that** centring recesses (51) are provided in the region of the longitudinal side edge (45) to accommodate complementary centring projections in the plate (6) forming the base.

56. Container as claimed in one or more of the preceding claims, **characterised in that** an axis (59) of the hinge pin (11) extending in the plane of the internal face (28) is disposed at distance from the internal face (28) that is bigger than half the thickness (34) of the individual plates (2 to 5).

57. Container as claimed in one or more of the preceding claims, **characterised in that** the peripheral strip (63) in the region of the longitudinal terminal edge (45) lying opposite the hinge pins (11) constitutes the reinforcing brace (42) and is a hollow section.

58. Container as claimed in one or more of the preceding claims, **characterised in that** a total thickness (105) of the base of the peripheral strip (16) incorporating the bearing housings (14) in the end-face region of the plate (6) corresponds to a sum of the thickness (106) of the plate (6) plus a thickness (107) of the hinge pin (11) and a thickness (108) of the cladding element (20).

59. Container as claimed in one or more of the preceding claims, **characterised in that** a total thickness (110) of the peripheral strips (16) incorporating the bearing housings (14) for the plates (3, 5) is preferably greater, by the thickness (34) of the plates (2, 4), than a total thickness (105) of the peripheral strips (16) incorporating the bearing housings (14) in the region of the plates (2, 4).

60. Container as claimed in one or more of the preceding claims, **characterised in that** the plate (6) constituting the base has webs (112) standing proud of a bottom face (111).

61. Container as claimed in one or more of the preceding claims, **characterised in that** a dimension (113) of the webs (112) as seen in a side view of the plate (6) and a dimension (114) of the webs (112) as seen in a frontview of the plate (6) essentially correspond to an internal width (115) between the plates (2, 4) in their erected upright position and an internal width (116) between the erected plates (3, 5).

62. Container as claimed in one or more of the preceding claims, **characterised in that** the peripheral strip (16) for the plates (3, 5) projects out from the terminal edges (39) of the peripheral strips (16) for the plates (2, 4) by an amount (118).

63. Container as claimed in one or more of the preceding claims, **characterised in that** the amount (118) essentially corresponds to a thickness (104) of the stop strips (29) of the plates (3, 5).

64. Container as claimed in one or more of the preceding claims, **characterised in that** a height (46) of the plates (3, 5) forming the side walls is biggerthan the half width of the plate (6) forming the base.

65. Container as claimed in one or more of the preceding claims, **characterised in that** the plates (3, 5) forming the side walls fold down onto the plate (6) forming the base in a mutually overlapping transport position and a thickness (1-69) of the plates (3, 5) lying one on top of the other is no bigger than the thickness (34) of any one of the individual plates (2 to 5).

66. Container as claimed in one or more of the preceding claims, **characterised in that** an external side face of the reinforcing brace (42) engages in a complementary groove extending through the reinforcing brace (42) of the oppositely lying plate (3, 5).

67. Container as claimed in one or more of the preceding claims, **characterised in that** the plates (3, 5) form an overlap region (161).

68. Container as claimed in one or more of the preceding claims, **characterised in that** reinforcing ribs (167) are provided in the overlap region (161) of the plates (3, 5).

## Revendications

1. Conteneur constitué de plusieurs plaques (2 à 6), dont plusieurs des plaques (2 à 4) sont reliées d'une manière ajustable dans la zone de leurs arêtes frontales (13) par des dispositifs de pivotement (10) à la plaque (6) réalisée comme fond, et au moins un pivot (11) s'étendant parallèlement à une arête frontale (13) d'une plaque (2 à 5) est retenu par une baguette de liaison (12) à distance de celle-ci et peut être inséré dans une, de préférence plusieurs rainures (17) d'une autre plaque (6), et des bouts rapportés de retenue (19) sont disposés, et un bout rapporté de retenue (19) pour former un logement de réception (124) pour l'une des deux zones d'extrémité (18, 60; 121, 122) du pivot (11) est formé par un élément de revêtement (20) recouvrant une partie de la rainure (17) dans sa zone d'extrémité (18, 60; 121, 122) sur sa largeur, et la rainure (17) est disposée au moins dans des zones partielles d'une baguette de bord (16) faisant saillie sur l'une des plaques (2 à 5) et présente une longueur ouverte (25) qui correspond au moins à la longueur (26) du pivot (11) et, au voisinage d'une des joues latérales (22) de la rainure (17), un évidement (21) s'étendant dans la direction radiale, libérant une zone de pivotement de la baguette de liaison (12) autour d'un axe médian longitudinal (24) de la rainure (17) est disposé, qui est limité dans la direction de l'axe médian longitudinal (24) de la rainure (17) par le bout rapporté un l'autre retenue (19) et une butée (27), et un écart (125) entre le bout rapporté de retenue (19) et la butée (27) est au moins égal à une longueur (126) de la baguette de liaison (12) s'étendant parallèlement au pivot (11) mais non pas plus grand que la somme de la longueur (126) de la baguette de liaison (12) et d'une longueur de pivot (81) de la zone d'extrémité (18) du pivot (11) faisant saillie sur celle-ci dans la même direction, **caractérisé en ce que** la rainure (17), dans les baguettes de bord saillantes (16), est réalisée ouverte en direction des plaques opposées (2 à 5) réalisées comme parois latérales par les longueurs ouvertes (25) vers l'intérieur du conteneur.

2. Conteneur selon la revendication 1, **caractérisé en ce qu'**il est disposé entre au moins deux pivots (11) disposés au voisinage d'une arête frontale (13) d'une plaque (2 à 5), un organe de limitation de pivotement (53) actif au moins dans une position redressée de la plaque (2 à 5) qui, à un écart angulaire en avant dans la direction de pivotement pour le redressement de la plaque (2 à 5) fait saillie sur un cercle enveloppant qui s'étend coaxialement à un axe (59) du pivot (11) et présente un rayon qui correspond à une mesure (87) selon laquelle l'axe (59) est espacé de l'arête frontale (13) orientée vers celui-ci de l'autre plaque (2 à 5).

3. Conteneur selon la revendication 1 ou 2, **caractérisé en ce que** celui-ci est notamment réalisé en matériau synthétique et présente un fond et au moins deux plaques (2 à 5) reliées d'une manière ajustable à la plaque (6) réalisée comme fond par des dispositifs de pivotement (10), et **en ce que** dans une zone de recouvrement (138) entre des côtés frontaux étroits (43, 44; 91, 92) des plaques (2 à 5), un dispositif de liaison (70) pour relier relâchablement les plaques (3, 5; 2, 4) est disposé, qui s'oppose dans une position des plaques (3, 5; 2, 4) s'étendant à peu près perpendiculairement au fond à un relâchement automatique du dispositif de liaison (70), où le dispositif de liaison (70) est formé par un élément de liaison (69) disposé fixement dans une plaque (3, 5), qui fait saillie en direction de l'autre plaque (2, 4), et qu'il est associé à celui-ci sur l'autre plaque (2, 4) un logement de liaison (137) avec des éléments de retenue élastiquement déformables (139) selon un agencement congruent.

4. Conteneur selon l'une des revendications 1 à 3, **caractérisé en ce que** celui-ci est réalisé notamment en matériau synthétique et présente un fond avec au moins deux parois latérales reliées d'une manière ajustable au fond par des dispositifs de pivotement (10), et **en ce que** sont disposées dans une zone de recouvrement (138) entre une face frontale, une paroi latérale et une face intérieure de l'autre paroi latérale des éléments d'appui respectivement de centrage (66 à 68, 151, 98 à 102) formés par des saillies et des évidements qui, lors d'une position redressée des parois latérales, sont fixés relâchablement en s'engageant les uns dans les autres par concordance des formes, et respectivement plusieurs saillies et évidements sontjuxtaposés en une rangée verticale des bords avoisinants des parois latérales, et **en ce que** les éléments d'appui et de centrage (66 à 68, 151 et 98 à 102) sont disposés dans le plan d'une plaque (2 à 5) dans plusieurs directions spatiales s'étendant différemment les unes aux autres.

5. Conteneur selon la revendication 1, **caractérisé en ce qu'**une mesure (87) entre l'arête frontale (13) des plaques (2 à 5), orientée vers la plaque (6) réalisée comme fond et une partie de surface la plus proche, orientée vers celle-ci, de la zone d'extrémité (18) du pivot (11) est légèrement plus grande qu'une épaisseur (89) de l'élément de revêtement (20).

6. Conteneur selon la revendication 1 ou 5, **caractérisé en ce que** la distance (88) à une zone d'extrémité (18) s'appliquant à l'élément de revêtement (20) correspond à une épaisseur (89) de l'élément de revêtement (20).

7. Conteneur selon l'une ou plusieurs des revendications 1, 5 et 6, **caractérisé en ce que** la différence entre l'épaisseur (89) et la mesure (87) est aussi grande qu'un écart (58) entre la face d'appui (54) de l'organe de limitation de pivotement (53) et la face d'appui (55) des plaques (2 à 5), respectivement de la plaque (6).

8. Conteneur selon l'une ou plusieurs des revendications 1 et 5 à 7, **caractérisé en ce qu'**une différence entre l'épaisseur (89) et la mesure (87) est plus petite que l'écart (58) entre la face d'application (54) et la face d'appui (55) des plaques (2 à 5), respectivement de la plaque (6).

9. Conteneur selon l'une ou plusieurs des revendications 1 et 5 à 8, **caractérisé en ce que** le pivot (11) est formé par la baguette de liaison (12) et de plus par des zones d'extrémité (18, 60) faisant saillie le long de l'axe médian longitudinal (24).

10. Conteneur selon l'une ou plusieurs des revendications 1 et 5 à 9, **caractérisé en ce que** la zone d'extrémité (18) du pivot (11) présente une face de guidage conique (78) s'étendant au côté frontal.

11. Conteneur selon l'une ou plusieurs des revendications 1 et 5 à 10, **caractérisé en ce que** la rainure (17) présente un fond de rainure concave (120).

12. Conteneur selon l'une ou plusieurs des revendications 1 et 5 à 11, **caractérisé en ce que** la rainure (17) présente deux zones d'extrémité (121, 122), et l'une des zones d'extrémité (121, 122), s'étendant sur un diamètre (123) de la rainure (17), est fermée par le bout rapporté de retenue (19) respectivement l'élément de revêtement (20).

13. Conteneur selon l'une ou plusieurs des revendications 1 et 5 à 12, **caractérisé en ce que** le bout rapporté de retenue (19) forme avec l'élément de revêtement (20) un logement de réception (124) pour la zone d'extrémité (18) du pivot (11).

14. Conteneur selon l'une ou plusieurs des revendications 1 et 5 à 13, **caractérisé en ce qu'**un diamètre (123) de la rainure (17) est réalisé pour être aussi grand, respectivement légèrement plus grand qu'un diamètre (107) du pivot (11).

15. Conteneur selon l'une ou plusieurs des revendications 1 et 5 à 14, **caractérisé en ce que** la rainure (17) est disposée dans des zones partielles de la baguette de bord (16) dans les boîtiers de palier (14).

16. Conteneur selon l'une ou plusieurs des revendications 1 et 5 à 15, **caractérisé en ce qu'**une longueur ouverte (25) de la rainure est réalisée pour être au moins égale à une longueur (26) respectivement légèrement plus grande que la longueur (26) du pivot (11).

17. Conteneur selon l'une ou plusieurs des revendications 1 et 5 à 16, **caractérisé en ce qu'**un écart (125) entre le bout rapporté de retenue (19) et la butée (27) est réalisé pour être au moins aussi grand respectivement plus grand qu'une longueur (126) de la baguette de liaison (12) mesurée dans la direction de l'axe médian longitudinal (24).

18. Conteneur selon l'une ou plusieurs des revendications 1 et 5 à 17, **caractérisé en ce qu**'il est disposé entre une face frontale (130) orientée vers la butée (27) du bout rapporté de retenue (19) et la butée (27) de la paroi latérale (22) de la rainure (17) un évidement (21) s'étendant radialement qui présente une longueur d'arc (131).

19. Conteneur selon l'une ou plusieurs des revendications 1 et 5 à 18, **caractérisé en ce que** l'évidement (121) est réalisé pour libérer une zone de pivotement pour la baguette de liaison (12) dans la dimension de la longueur d'arc (131).

20. Conteneur selon l'une ou plusieurs des revendications 1 et 5 à 19, **caractérisé en ce qu'**une zone d'extrémité de la joue latérale (22) orientée vers l'extrémité ouverte de la rainure (17) présente une face inclinée (132) s'étendant en direction de l'axe médian longitudinal (24).

21. Conteneur selon l'une ou plusieurs des revendications 1 et 5 à 20, **caractérisé en ce qu'**une largeur d'ouverture de la rainure (17) est réalisée dans la même grandeur que le diamètre (107) du pivot (11).

22. Conteneur selon l'une ou plusieurs des revendications 1 et 5 à 21, **caractérisé en ce que** la largeur d'ouverture (133) de la rainure (17) est réalisée pour être légèrement plus petite que le diamètre (107) du pivot (11).

23. Conteneur selon l'une ou plusieurs des revendications 1 et 5 à 22, **caractérisé en ce que** le fond (120) de la rainure présente un évidement (134).qui est adapté au cercle enveloppant du pivot (11).

24. Conteneur selon la revendication 2, **caractérisé en ce qu'**une arête latérale (156) de la face d'application (54) à peu près rectangulaire des plaques (2 à 5) fait saillie sur le cercle enveloppant tangent à celles-ci avec une face enveloppante (57) formée par l'axe médian longitudinal (24) du pivot (11).

25. Conteneur selon les revendications 2 ou 24, **caractérisé en ce que** les faces d'application (54) des organes de limitation de pivotement (53) sont disposées à un léger écart (58) au-dessus des faces d'appui (55) associées à celles-ci de la plaque formant le fond.

26. Conteneur selon les revendications 2, 24 et 25, **caractérisé en ce que** la face d'appui (54) des organes de limitation de pivotement (53), dans le cas d'une position des plaques (2, 5) à angle droit à la plaque (6), est espacée relativement à la face d'appui (55) parallèlement et de celle-ci légèrement en hauteur (46) des plaques (2 à 5).

27. Conteneur selon l'une ou plusieurs des revendications 2 et 24 à 26, **caractérisé en ce que** les pivots (11) maintenus par les baguettes de liaison (12) à distance de l'arête frontale (13) sont disposés par paires.

28. Conteneur selon l'une ou plusieurs des revendications 2 et 24 à 27, **caractérisé en ce que** les paires de pivots (71, 72) les plus proches d'un milieu longitudinal des plaques (3, 5) ont une plus petite distance (73) entre les différents pivots (11) que les paires de pivots (74, 75) disposés au voisinage des côtés frontaux étroits (43, 44), où les pivots (11) sont disposés à une distance (76) l'un de l'autre.

29. Conteneur selon l'une ou plusieurs des revendications 2 et 24 à 28, **caractérisé en ce que** des organes de délimitation de pivotement (53) sont disposés respectivement entre les paires de pivots (71, 72 et 74, 75).

30. Conteneur selon l'une ou plusieurs des revendications 2 et 24 à 29, **caractérisé en ce qu'**une longueur (77) des organes de limitation de pivotement (53) dans la direction des côtés frontaux étroits (43, 44) entre les paires de pivot (71, 72) est plus petite que celle entre les paires de pivots (71, 74 respectivement, 72, 75).

31. Conteneur selon l'une ou plusieurs des revendications 2 et 24 à 30, **caractérisé en ce que** la longueur (77) des organes de limitation de pivotement (53) est plus petite qu'une longueur (80) d'un évidement (79) dans le boîtier de palier (14).

32. Conteneur selon l'une ou plusieurs des revendications 2 et 24 à 31, **caractérisé en ce que** la différence entre la longueur (77) et la longueur (80) correspond à une longueur de pivot (81) de la zone d'extrémité (18) faisant saillie sur la baguette de liaison (12).

33. Conteneur selon l'une ou plusieurs des revendications 2 et 24 à 32, **caractérisé en ce qu'**une hauteur (82) des organes de limitation de pivotement (53) est aussi grande qu'une largeur (83) du boîtier de palier (14).

34. Conteneur selon l'une ou plusieurs des revendications 2 et 24 à 33, **caractérisé en ce qu'**une distance (84) entre l'axe médian longitudinal (24) des pivots (11) et la face d'application (54) de l'organe de limitation de pivotement (53) n'est pas plus grande qu'une distance (85) entre l'axe médian longitudinal (24) de la rainure (17) et une paroi latérale intérieure (86) du boîtier de palier (14) qui est orientée vers la plaque (6), respectivement la zone médiane de la plaque (6).

35. Conteneur selon la revendication 3, **caractérisé en ce que** l'élément de liaison (69) est formé par un prolongement en forme de tête de champignon (140).

36. Conteneur selon la revendication 3 ou 35, **caractérisé en ce que** les éléments de retenue (139) déformables élastiquement présentent des saillies pour passer derrière les prolongements (140) en forme de tête de champignon.

37. Conteneur selon l'une ou plusieurs des revendications 3 et 35 et 36, **caractérisé en ce que** les logements de liaison (137) sont réalisés en forme de cercle ou de carré, respectivement en polygone.

38. Conteneur selon l'une ou plusieurs des revendications 3 et 35 à 37, **caractérisé en ce que** les logements de liaison (137) sont réalisés en forme de trou oblong.

39. Conteneur selon l'une ou plusieurs des revendications 3 et 35 à 38, **caractérisé en ce que** les logements de liaison (137) sont disposés angulairement dans une zone de bord des plaques (2 à 5).

40. Conteneur selon l'une ou plusieurs des revendications 3 et 35 à 39, **caractérisé en ce qu'**une largeur (145) au côté frontal du prolongement (40) est plus petite qu'une largeur d'ouverture (146) des éléments de retenue (139) orientée vers ce côté frontal du prolongement (40).

41. Conteneur selon l'une ou plusieurs des revendications 3 et 35 à 40, **caractérisé en ce que** sont disposés le long des éléments de retenue (139), pour obtenir une réalisation élastique de ceux-ci, un nombre sélectif d'évidements (147).

42. Conteneur selon la revendication 4, **caractérisé en ce que** les éléments d'appui et de centrage (66 à 68, 151, 98 à 102) sont réalisés en forme de S et/ou en forme de L.

43. Conteneur selon les revendications 4 ou 42, **caractérisé en ce que** les plaques (2, 4) présentent au voisinage de leurs côtés frontaux étroits (91, 92) des éléments d'appui ou de centrage (108 à 112) s'étendant de la baguette de bord (63) en direction de l'étrier de renforcement (42) et sur une épaisseur (97) que présentent les plaques (2, 4) dans la zone entre l'étrier de renforcement (42) et le dispositif de pivotement (11).

44. Conteneur selon les revendications 4, 42 et 43, **caractérisé en ce que** les éléments d'appui ou de centrage (66 à 68, 98 à 102) sont disposés dans les zones des plaques (2, 5 ou 3, 4) associées à eux d'une manière contiguë dans plusieurs directions spatiales s'étendant différemment les unes aux autres.

45. Conteneur selon l'une ou plusieurs des revendications 4 et 42 à 44, **caractérisé en ce que** sont ménagés dans la baguette de bord (63) des plaques (2, 4) des moulages (155) qui sont réalisés pour la réception de zones partielles (156) des éléments d'appui ou de centrage (66, 67, 151).

46. Conteneur selon l'une ou plusieurs des revendications 4 et 42 à 45, **caractérisé en ce qu'**une profondeur de ces moulages (155) correspond à une hauteur, mesurée perpendiculairement à la baguette de butée (29), des zones partielles (156) des éléments d'appui ou de centrage (66, 67, 151).

47. Conteneur selon l'une ou plusieurs des revendications 4 et 42 à 46, **caractérisé en ce que** les côtés extérieurs (157) des éléments d'appui ou de centrage (98 à 100) s'appliquent par concordance des formes aux côtés extérieurs (158) des éléments d'appui ou de centrage (66 à 68) de la baguette de butée (29).

48. Conteneur selon l'une ou plusieurs des revendications 4 et 42 à 47, **caractérisé en ce qu'**une hauteur (159) des éléments d'appui ou de centrage (98 à 100) est égale à une hauteur (160) des éléments d'appui ou de centrage (66 à 68).

49. Conteneur selon l'une ou plusieurs des revendications 4 et 42 à 48, **caractérisé en ce que** les côtés extérieurs (157, 158) forment des faces inclinées correspondant l'une avec l'autre.

50. Conteneur selon l'une ou plusieurs des revendications 4 et 42 à 49, **caractérisé en ce que** les éléments d'appui ou de centrage (98 à 102) de la plaque (2) diminuent en direction de la baguette de butée (29) de la plaque (5).

51. Conteneur selon l'une ou plusieurs des revendications 4 et 42 à 50, **caractérisé en ce que** les éléments d'appui ou de centrage (66 à 68, 151) de la baguette de butée (29) de la plaque (5) diminuent en direction de la plaque (2).

52. Conteneur selon l'une ou plusieurs des revendications précédentes, **caractérisé en ce qu'**une longueur (35) des plaques (2,4) formant les parois latérales frontales est aussi grande ou légèrement plus petite qu'une largeur intérieure (36) entre des faces latérales orientées l'une vers l'autre des boîtiers de palier (14) pour la réception des pivots (11) des plaques (3, 5) formant les parois latérales longitudinales.

53. Conteneur selon l'une ou plusieurs des revendications précédentes, **caractérisé en ce qu'**une largeur intérieure (37) entre les baguettes de butée (29) de chacune des plaques (3, 5) formant les parois latérales longitudinales est aussi grande ou légèrement plus grande qu'une distance maximale (38) entre les faces latérales frontales éloignées l'une de l'autre des boîtiers de palier (14).

54. Conteneur selon l'une ou plusieurs des revendications précédentes, **caractérisé en ce que** les plaques (2 à 5) formant les parois latérales présentent des supports longitudinaux en forme de tige (47, 48), des supports verticaux (49) et des éléments d'appui diagonaux (50).

55. Conteneur selon l'une ou plusieurs des revendications précédentes, **caractérisé en ce que** sont disposés au voisinage de l'arête latérale longitudinale (45) des évidements de centrage (51) pour la réception de saillies de centrage correspondantes dans la plaque (6) formant le fond.

56. Conteneur selon l'une ou plusieurs des revendications précédentes, **caractérisé en ce qu'**un axe (59) du pivot (11) s'étendant dans le plan de la face intérieure (28) est disposé à une plus grande distance de la face intérieure (28) que la moitié de l'épaisseur (34) des plaques individuelles (2 à 5).

57. Conteneur selon l'une ou plusieurs des revendications précédentes, **caractérisé en ce que** la baguette de bord (63) forme au voisinage de l'arête latérale frontale longitudinale (45) opposée au pivot (11) l'étrier de renforcement (42) et est réalisée comme profilé creux.

58. Conteneur selon l'une ou plusieurs des revendications précédentes, **caractérisé en ce qu'**une épaisseur totale (105) du fond de la baguette de bord (16) avec les boîtiers de palier (14) dans la zone au côté frontal de la plaque (6) correspond à une somme de l'épaisseur (106) de la plaque (6) plus une épaisseur (107) du pivot (11) et une épaisseur (108) de l'élément de revêtement (20).

59. Conteneur selon l'une ou plusieurs des revendications précédentes, **caractérisé en ce qu'**une épaisseur totale (110) des baguettes de bord (16) avec les boîtiers de palier (14) pour les plaques (3, 5) est de préférence plus élevée de l'épaisseur (34) des plaques (2, 4) qu'une épaisseur totale (105) des baguettes de bord (16) avec les boîtiers de palier (14) au voisinage des plaques (2, 4).

60. Conteneur selon l'une ou plusieurs des revendications précédentes, **caractérisé en ce que** la plaque (6) réalisée comme fond présente des baguettes (112) faisant saillie sur un côté inférieur (111).

61. Conteneur selon l'une ou plusieurs des revendications précédentes, **caractérisé en ce qu'**une dimension (113) des baguettes (112), dans la vue de côté de la plaque (6), et une dimension (114) des baguettes (112) dans la vue frontale de la plaque (6) correspond à peu près à une largeur intérieure (115) entre les plaques (2, 4) dans leur position redressée et une largeur intérieure (116) entre les plaques redressées (3, 5).

62. Conteneur selon l'une ou plusieurs des revendications précédentes, **caractérisé en ce que** la baguette de bord (16) pour les plaques (3, 5) fait saillie selon une mesure (118) par rapport aux arêtes frontales (39) des baguettes de bord (16) pour les plaques (2, 4).

63. Conteneur selon l'une ou plusieurs des revendications précédentes, **caractérisé en ce que** la mesure (118) correspond à peu près à une épaisseur (104) des baguettes de butée (29) des plaques (3, 5).

64. Conteneur selon l'une ou plusieurs des revendications précédentes, **caractérisé en ce qu'**une hauteur (46) des plaques (3, 5) formant les parois latérales est plus grande que la moitié de la largeur de la plaque (6) formant le fond.

65. Conteneur selon l'une ou plusieurs des revendications précédentes, **caractérisé en ce que** les plaques (3, 5) formant les parois latérales, dans leur position de transport s'appliquant sur la plaque (6) formant le fond se chevauchent et qu'une épaisseur (169) des plaques superposées (3, 5) n'est pas plus grande que l'épaisseur (34) d'une seule des plaques (2 à 5).

66. Conteneur selon l'une ou plusieurs des revendications précédentes, **caractérisé en ce qu'**une face latérale extérieure de.l'étrier de renforcement (42) s'engage dans une rainure s'étendant en sens opposé dans l'étrier de renforcement (42) de la plaque opposée (3, 5).

67. Conteneur selon l'une ou plusieurs des revendications précédentes, **caractérisé en ce que** les plaques (3, 5) forment une zone de recouvrement (161).

68. Conteneur selon l'une ou plusieurs des revendications précédentes, **caractérisé en ce que** des nervures de renforcement (167) sont disposées dans la zone de recouvrement (161) des plaques (3, 5).
